(19) Europäisches Patentamt
European Patent Office
Office européen des brevets

(11) **EP 4 054 255 B1**

(12) **EUROPEAN PATENT SPECIFICATION**

(45) Date of publication and mention
of the grant of the patent:
**06.11.2024 Bulletin 2024/45**

(21) Application number: **19955310.8**

(22) Date of filing: **06.12.2019**

(51) International Patent Classification (IPC):
***H04W 68/02*** *(2009.01)*

(52) Cooperative Patent Classification (CPC):
**H04W 68/02;** Y02D 30/70

(86) International application number:
**PCT/CN2019/123661**

(87) International publication number:
**WO 2021/109124 (10.06.2021 Gazette 2021/23)**

(54) **COMMUNICATION METHOD, RADIO ACCESS NETWORK DEVICE AND SYSTEM FOR PERFORMING PAGING**

KOMMUNIKATIONSVERFAHREN, FUNKZUGANGSNETZWERKVORRICHTUNG UND SYSTEM ZUR DURCHFÜHRUNG VON PAGING

PROCÉDÉ DE COMMUNICATION, DISPOSITIF DE RÉSEAU D'ACCÈS RADIO ET SYSTÈME DE RADIOMESSAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2022 Bulletin 2022/36**

(73) Proprietor: **Huawei Technologies Co., Ltd.
Shenzhen, Guangdong 518129 (CN)**

(72) Inventors:
• **YU, Guohua
Shenzhen, Guangdong 518129 (CN)**
• **WANG, Daowei
Shenzhen, Guangdong 518129 (CN)**
• **LI, Baomin
Shenzhen, Guangdong 518129 (CN)**

(74) Representative: **MERH-IP Matias Erny Reichl Hoffmann
Patentanwälte PartG mbB
Paul-Heyse-Strasse 29
80336 München (DE)**

(56) References cited:
CN-A- 101 534 553      CN-A- 101 534 567
CN-A- 102 843 768      CN-A- 103 906 098
US-A1- 2017 366 236

• **ERICSSON: "Calculation of Paging Occasions", 3GPP DRAFT; R2-1806805 - CALCULATION OF PAGING OCCASIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Busan, South Korea; 20180521 - 20180525, 20 May 2018 (2018-05-20), Mobile Competence Centre ; 650, route des Lucioles ; F-06921 Sophia-Antipolis Cedex ; France, XP051443259**

## Description

## TECHNICAL FIELD

This application relates to communication technologies, and more specifically, to a communication method, a radio access network device, and a system.

## BACKGROUND

Paging (paging) may be used to notify a terminal device to establish a service; or used to notify the terminal device that cell system information changes, so that the terminal device re-reads a changed system broadcast message; or used to notify the terminal device to receive earthquake and tsunami warning system (earthquake and tsunami warning system, ETWS) information.

Sending and receiving occasions of a paging message are determined based on a paging parameter. A radio access network device calculates a paging occasion based on the paging parameter, and sends the paging message on the paging occasion. The terminal device calculates a paging occasion based on the same paging parameter in the same calculation manner, and receives the paging message on the paging occasion.

In a current technology, a paging parameter needs to be manually configured in advance. After the configuration is completed, the radio access network device determines, based on the configured paging parameter, a paging occasion for sending a paging message, and sends the paging message on the paging occasion.

However, using the existing paging mechanism causes excessively large overheads of paging slots and high paging energy consumption.

Document CN 101 534 553 A discloses a method which carries out self-adaptive paging control in GSM by a BCCH. BTS selects page period parameter self-adaptively in a certain range according to the network condition, informs the terminal of updated paging period parameter by the BCCH, and feeds the updated paging period parameter back to the BSC.SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of this application provide a communication method, a radio access network device, and a system, to resolve a problem of excessively large overheads of paging slots and high paging energy consumption in a current technology.

According to a first aspect, an embodiment of this application provides a communication method. The method includes:

A radio access network device determines, based on first information and second information, a quantity of paging cycles included in a paging cycle group and a sending location of paging information in the paging cycle group, and sends the paging information at the sending location. The paging cycle group includes at least one paging cycle, and different paging occasions in the paging cycle group serve different terminal devices. The first information is used to indicate a peak quantity of paging messages from a core network device within specified time, and the second information is used to indicate a paging capability of the radio access network device.

In the method, the peak quantity of the paging messages from the core network device and the paging messages generated by the radio access network device within the specified time can represent a quantity of paging messages that need to be processed by the radio access network device, namely, paging load of the radio access network device, where the peak quantity of the paging messages from the core network device and the paging messages generated by the radio access network device within the specified time are indicated by the first information; and the paging capability indicated by the second information can represent a quantity of paging messages that can be processed by the access network device in a unit time. The two types of information can represent a system state of the radio access network. In addition, the radio access network device combines the at least one paging cycle into a paging cycle group, and different paging occasions in the paging cycle group serve different terminals devices. In different system states, a quantity of paging cycles included in the paging cycle group may be different. The radio access network device may determine, based on the first information and the second information, a length of the paging cycle group and the sending location of the paging information in the paging cycle group. The radio access network device may adjust the length of the paging cycle group to be greater than a current length in the case of small paging load. In addition, a terminal device still occupies only one paging occasion in the adjusted paging cycle group. Therefore, a density of paging performed by the radio access network device can be reduced. In this way, the paging occasion matches the system state, and paging slots can be reduced in the case of small paging load, to reduce overheads of the paging slots and paging energy consumption. Optionally, in the foregoing implementation, the terminal device may not need to be notified of the sending location finally determined by the radio access network device, and the terminal device may be paged based on an initial paging parameter delivered by the radio access network device, to reduce signaling overheads.

In a possible implementation, the radio access network device may determine the quantity of the paging cycles included in the paging cycle group and the sending location of the paging information in the paging cycle group.

The third information is used to indicate system load of the radio access network device.

In this manner, the third information can represent the system load of the radio access network device, and the quantity of paging cycles included in the paging cycle group and the sending locations are determined based on the system load, so that a quantity of sending locations of the radio access network device for paging matches the system load of the radio access network device.

In the possible implementation, when the system load is less than a first preset threshold, the radio access network device determines, based on the first information and the second information, the quantity of the paging cycles included in the paging cycle group and the sending location of the paging information in the paging cycle group.

In the possible implementation, if the system load is less than the first preset threshold, it indicates that the current system load of the radio access network device is small. In this case, the radio access network device re-determines, based on the first information and the second information, the quantity of the paging cycles included in the paging cycle group and the sending location of the paging information in the paging cycle group, to reduce paging slots and a paging capability in the case of small paging load. However, when the current system load of the radio access network device is large, even if the paging load is small and fewer paging slots is occupied, original paging slots may still be used for data transmission to support large system load, but system energy consumption cannot be reduced. Therefore, the radio access network device re-determines, based on the first information and the second information, the quantity of the paging cycles included in the paging cycle group and the sending location of the paging information in the paging cycle group only when the system load of the radio access network device is less than the first preset threshold, to determine a paging cycle group that matches the system load and the paging load, so that the adjustment of the length of the paging cycle group can really reduce overheads of the paging slots and paging consumption in the case of small paging load.

In a possible implementation, if a ratio of the peak quantity of the paging messages to the paging capability is less than a second preset threshold, the radio access network device determines that the sending location of the paging information is a location in a first paging cycle group.

In the possible implementation, a quantity of paging cycles included in the first paging cycle group is greater than a quantity of paging cycles included in a paging cycle group currently used by the radio access network device.

In this manner, if the ratio of the peak quantity of the paging messages to the paging capability is less than the second preset threshold, it indicates that the paging load is small. In this case, the determined quantity of the paging cycles included in the first paging cycle group is greater than a quantity of paging cycles included in a currently used paging cycle group, that is, a paging occasion density decreases. Performing paging based on the first paging cycle group can reduce slots overheads and power consumption.

In a possible implementation, if a ratio of the peak quantity of the paging messages to the paging capability is greater than a third preset threshold, the radio access network device determines that the sending location of the paging information is a location in a second paging cycle group.

In the possible implementation, a quantity of paging cycles included in the second paging cycle group is less than a quantity of paging cycles included in a paging cycle group currently used by the radio access network device.

In this manner, if the ratio of the peak quantity of the paging messages to the paging capability is greater than the third preset threshold, it indicates that the paging load is large. In this case, the determined quantity of the paging cycles included in the second paging cycle group is less than a quantity of paging cycles included in a currently used paging cycle group, that is, a paging occasion density increases. Performing paging based on the second paging cycle group can avoid problems such as message delay due to lack of resources.

In the first aspect, in a possible implementation, the sending location includes at least one paging cycle in the paging cycle group.

In this manner, the paging information is aggregated to the at least one paging cycle in the paging cycle group for sending, and other paging cycles in the paging cycle group are used as a paging dormant period, and no paging information needs to be sent in the paging dormant period. Therefore, overheads of paging slots and paging energy consumption can be reduced in the case of small paging load.

In the first aspect, in a possible implementation, the sending location includes at least one paging frame in the at least one paging cycle in the paging cycle group.

In this manner, the paging information is aggregated to the at least one paging frame in the at least one paging cycle in the paging cycle group for sending, and other paging frames in the paging cycle are used as a paging dormant period, and no paging information needs to be sent in the paging dormant period. Therefore, overheads of paging slots and paging energy consumption can be reduced in the case of small paging load.

In the first aspect, in a possible implementation, the sending location includes at least one paging occasion in at least one paging frame in the at least one paging cycle in the paging cycle group.

In this manner, the paging information is aggregated to the at least one paging occasion in the at least one paging frame in the at least one paging cycle in the paging cycle group for sending, and other paging occasions in the paging frame are used as a paging dormant period, and no paging information needs to be sent in the paging dormant period. Therefore, overheads of paging slots and paging energy consumption can be reduced in the case of small paging load.

In the first aspect, in a possible implementation, the radio access network device receives a first message sent by the core network device, where the first message is used to indicate the radio access network device to page a target terminal device. The radio access network device sends a second message to the target terminal device at a location that belongs to the target terminal device and that is in the sending location, where the second message is used to page the target terminal device.

According to a second aspect, an embodiment of this application provides a communication system. The system includes:

A terminal device receives paging information at a sending location, where the sending location is a sending location in a paging cycle group, the paging cycle group includes at least one paging cycle, and different paging occasions in the paging cycle group serve different terminal devices. A quantity of paging cycles included in the paging cycle group and the sending location in the paging cycle group are determined by a radio access network device based on first information and second information, the first information is used to indicate a peak quantity of paging messages from a core network device and paging messages generated by the radio access network device within specified time, and the second information is used to indicate a paging capability of the radio access network device.

In the system, the peak quantity of the paging messages from the core network device and the paging messages generated by the radio access network device within the specified time can represent a quantity of paging messages that need to be processed by the radio access network device, namely, paging load of the radio access network device, where the peak quantity of the paging messages from the core network device and the paging messages generated by the radio access network device within the specified time are indicated by the first information; and the paging capability indicated by the second information can represent a quantity of paging messages that can be processed by the access network device in a unit time. The two types of information can represent a system state of the radio access network. In addition, the radio access network device combines the at least one paging cycle into a paging cycle group, and different paging occasions in the paging cycle group serve different terminals devices. In different system states, a quantity of paging cycles included in the paging cycle group may be different. The radio access network device may determine, based on the first information and the second information, a length of the paging cycle group and the sending location of the paging information in the paging cycle group. The radio access network device may adjust the length of the paging cycle group to be greater than the current length in the case of small paging load. In addition, a terminal device still occupies only one paging occasion in the adjusted paging cycle group. Therefore, a density of paging performed by the radio access network device can be reduced. In this way, the paging occasion matches the system state, and paging slots can be reduced in the case of small paging load, to reduce overheads of the paging slots and paging energy consumption. Optionally, in the foregoing implementation, the terminal device may not need to be notified of the sending location finally determined by the radio access network device, and the terminal device may be paged based on an initial paging parameter delivered by the radio access network device, to reduce signaling overheads.

In a possible implementation, the quantity of the paging cycles included in the paging cycle group and the sending location in the paging cycle group are determined by the radio access network device based on the first information, the second information, and third information. The third information is used to indicate system load of the radio access network device.

In this manner, the third information can represent the system load of the radio access network device, and the quantity of paging cycles included in the paging cycle group and the sending locations are determined based on the system load, so that a quantity of locations of the radio access network device for paging matches the system load of the radio access network device.

In the second aspect, in a possible implementation, the sending location includes at least one paging cycle in the paging cycle group.

In the second aspect, in a possible implementation, the sending location includes at least one paging frame in the at least one paging cycle in the paging cycle group.

In the second aspect, in a possible implementation, the sending location includes at least one paging occasion in at least one paging frame in the at least one paging cycle in the paging cycle group.

In the second aspect, in a possible implementation, the terminal device may receive a second message at a location that belongs to the target terminal device and that is in the sending location, where the second message is used to page the target terminal device.

According to a third aspect, an embodiment of this application provides a radio access network device. The radio access network device includes a processing module and a sending module.

The processing module is configured to: determine, based on first information and second information, a quantity of paging cycles included in a paging cycle group and a sending location of paging information in the paging cycle group, where the paging cycle group includes at least one paging cycle, and different paging occasions in the paging cycle group serve different terminal devices. The first information is used to indicate a peak quantity of paging messages from a core network device and paging messages generated by the radio access network device within specified time, and the second information is used to indicate a paging capability of the radio access network device.

The sending module is configured to send the paging information at the sending location.

In a possible implementation, the processing module is specifically configured to:

determining, based on the first information, the second information, and third information, the quantity of the paging cycles included in the paging cycle group and the sending location of the paging information in the paging cycle group.

The third information is used to indicate system load of the radio access network device.

In the possible implementation, the processing module is specifically configured to:

when the system load is less than a first preset threshold, determine, based on the first information and the second information, the quantity of the paging cycles included in the paging cycle group and the sending location of the paging information in the paging cycle group.

In a possible implementation, the processing module is specifically configured to:

when a ratio of the peak quantity of the paging messages to the paging capability is less than a second preset threshold, determine that the sending location of the paging information is a location in a first paging cycle group.

In a possible implementation, a quantity of paging cycles included in the first paging cycle group is greater than a quantity of paging cycles included in a paging cycle group currently used by the radio access network device.

In a possible implementation, the processing module is specifically configured to:

when a ratio of the peak quantity of the paging messages to the paging capability is greater than a third preset threshold, determine that the sending location of the paging information is a location in a second paging cycle group.

In the possible implementation, a quantity of paging cycles included in the second paging cycle group is less than a quantity of paging cycles included in a paging cycle group currently used by the radio access network device.

For beneficial effects of the radio access network device according to the third aspect and the possible implementations of the third aspect, refer to the beneficial effects brought by the first aspect and the possible implementations of the first aspect. Details are not described herein again.

In the third aspect, in a possible implementation, the sending location includes at least one paging cycle in the paging cycle group.

In the third aspect, in a possible implementation, the sending location includes at least one paging frame in the at least one paging cycle in the paging cycle group.

In the third aspect, in a possible implementation, the sending location includes at least one paging occasion in at least one paging frame in the at least one paging cycle in the paging cycle group.

In the third aspect, in a possible implementation, the radio access network device further includes a receiving module.

The receiving module is configured to receive a first message sent by the core network device, where the first message is used to indicate the radio access network device to page a target terminal device.

The sending module is specifically configured to send a second message to the target terminal device at a location that belongs to the target terminal device and that is in the sending location, where the second message is used to page the target terminal device.

According to a fourth aspect, an embodiment of this application provides a computer program product including instructions. When the computer program product runs on a computer, the computer is enabled to perform the method provided in the first aspect or the possible implementations of the first aspect.

According to a fifth aspect, an embodiment of this application provides a computer-readable storage medium. The computer-readable storage medium stores instructions, and when the instructions are run on a computer, the computer is enabled to perform the method provided in the first aspect or the possible implementations of the first aspect.

**BRIEF DESCRIPTION OF DRAWINGS**

FIG. 1 is a schematic diagram of an architecture of a mobile communication system used in an embodiment of this application;

FIG. 2 is a schematic diagram of paging parameters in an NR mobile communication system;

FIG. 3 is an interaction flowchart of sending a paging message based on a paging parameter in a current technology;

FIG. 4 is a schematic flowchart of a communication method according to an embodiment of this application;

FIG. 5 shows an example in which a paging location is at least one paging cycle in a first paging cycle group;

FIG. 6 shows an example in which a paging location is at least one paging frame in at least one paging cycle in a first paging cycle group;

FIG. 7A and FIG. 7B show an example in which a paging location is at least one paging occasion in at least one paging frame in at least one paging cycle in a first paging cycle group;

FIG. 8 is a schematic flowchart of a communication method according to an embodiment of this application;

FIG. 9 is a flowchart of paging information exchange in a communication method according to an embodiment of this application;

FIG. 10 is a schematic diagram of a structure of a radio access network device according to an embodiment of this application;

FIG. 11 is another schematic diagram of a structure of a radio access network device according to an embodiment of this application;

FIG. 12 is a schematic diagram of a structure of a terminal device according to an embodiment of this application;

FIG. 13 is another schematic diagram of a structure of a terminal device according to an embodiment of this application;

FIG. 14 is a schematic diagram of a structure of a radio access network device according to an embodiment of this application; and

FIG. 15 is a schematic diagram of a structure of a terminal device according to an embodiment of this application.

## DESCRIPTION OF EMBODIMENTS

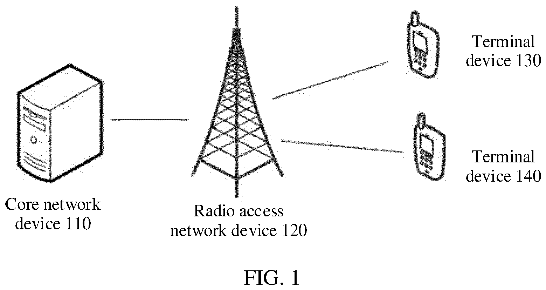

FIG. 1 is a schematic diagram of an architecture of a mobile communication system used in embodiments of this application. As shown in FIG. 1, the mobile communication system may include a core network device 110, a radio access network device 120, and at least one terminal device (for example, a terminal device 130 and a terminal device 140 shown in FIG. 1). The terminal device is connected to the radio access network device 120 in a wireless manner, and the radio access network device 120 is connected to the core network device 110 in a wireless or wired manner. The core network device 110 and the radio access network device 120 may be different independent physical devices, or functions of the core network device 110 and logical functions of the radio access network device 120 may be integrated on a same physical device, or some of functions of the core network device 110 and some of functions of the radio access network device 120 may be integrated on one physical device. The terminal device may be located at a fixed location, or may be mobile. FIG. 1 is only a schematic diagram. The mobile communication system may further include another radio access network device, for example, may further include a wireless relay device and a wireless backhaul device, which are not shown in FIG. 1. A quantity of core network devices 110, radio access network devices 120, and terminal devices included in the mobile communication system is not limited in embodiments of this application.

The core network (core network, CN) device 110 may be different devices in different mobile communication systems. For example, in a 3G mobile communication system, the core network device 110 may be a serving general packet radio service (general packet radio service, GPRS) support node (serving GPRS support node, SGSN) and/or a gateway GPRS support node (gateway GPRS support node, GGSN); in a 4G mobile communication system, the core network device 110 may be a mobility management entity (mobility management entity, MME) and/or a serving gateway (serving gateway, S-GW); and in a 5G mobile communication system, the core network device 110 may be an access and mobility management function (access and mobility management function, AMF) network element, a session management function (session management function, SMF) network element, or a user plane function (user plane function, UPF) network element.

The radio access network device 120 is an access device used by a terminal device to access the mobile communication system in a wireless manner, and may be a base transceiver station (base transceiver station, BTS) in a global system for mobile communications (global system for mobile communications, GSM) or a code division multiple access (code division multiple access, CDMA) network, or a node base station (node base station, NB) in wideband code division multiple access (wideband code division multiple access, WCDMA), an evolved (evolved) NB (eNB or eNodeB) in long term evolution (long term evolution, LTE), a radio controller in a cloud radio access network (cloud radio access network, CRAN) scenario, a base station in a 5G mobile communication system or a new radio (new radio, NR) communication system, a base station in a future mobile communication system, an access node in a Wi-Fi system, an access network device in a future evolved PLMN network, a wearable device, a vehicle-mounted device, or the like. A specific technology and a specific device form used by the radio access network device 120 are not limited in embodiments of this application. In embodiments of this application, the terms 5G and NR are interchangeable.

The terminal device may also be referred to as a terminal (Terminal), user equipment (user equipment, UE), a mobile station (mobile station, MS), a mobile terminal (mobile terminal, MT), an access terminal, a UE unit, a UE station, a mobile station, a remote station, a remote terminal, a mobile device, a UE terminal, a wireless communication device, a UE agent, a UE apparatus, or the like. The terminal device may be a mobile phone (mobile phone), a tablet computer (pad), a computer having wireless transmission and reception functions, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like.

The radio access network device 120 and the terminal device may be deployed on land, and include an indoor or outdoor device, a handheld device, or a vehicle-mounted device; or may be deployed on water; or may be deployed on a plane, a balloon, and a satellite in air. An application scenario of a radio access network device 120 and the terminal device is not limited in embodiments of this application.

Communication between the radio access network device 120 and the terminal device may be performed by using a licensed spectrum (licensed spectrum), an unlicensed spectrum (unlicensed spectrum), or both the licensed spectrum and the unlicensed spectrum. Communication between the radio access network device 120 and the terminal device may be performed by using a spectrum below 6 gigahertz (gigahertz, GHz), a spectrum above 6 GHz, or both the spectrum below 6 GHz and the spectrum above 6 GHz. A spectrum resource used between the radio access network device 120 and the terminal device is not limited in embodiments of this application.

With reference to the architecture of the mobile communication system shown in FIG. 1, the following describes paging by using an NR mobile communication system as an example.

Paging (paging) is used to notify a terminal device to establish a service; or used to notify the terminal device that cell system information changes, so that the terminal device re-reads a changed system broadcast message; or used to notify the terminal device to receive ETWS information. When the paging is used to notify the terminal device to establish a service, for example, the paging may be used to notify a terminal device in an idle (idle) state or a terminal device in an inactive state. The terminal device in the idle state is a terminal device that camps on a cell of a radio access network device but does not establish a connection to the radio access network device. The terminal device in the inactive state is a terminal device that maintains a connection to a core network device but does not enter an active state.

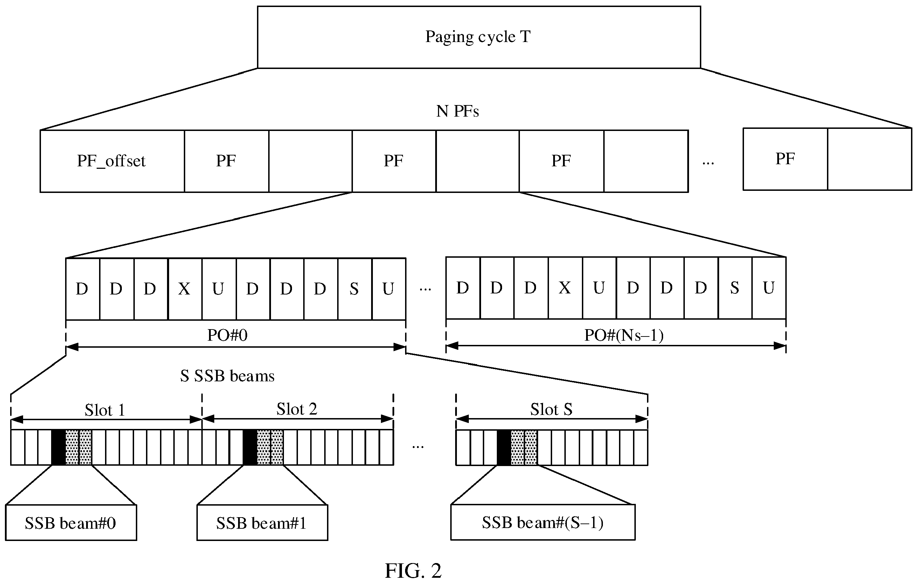

A paging process is completed through interaction between the core network device, the radio access network device, and the terminal device. After receiving a paging message from the core network device, the radio access network device determines, in a preset calculation manner based on a paging parameter and an identifier of the terminal device, a paging occasion for delivering the paging message, and scans all beams on the paging occasion to send the paging message. The terminal device determines, in the same calculation manner based on the same paging parameter and the same identifier of the terminal device as those of the radio access network, a paging occasion for receiving the paging message, and receives the paging message on a beam on the paging occasion. For the radio access network device and the terminal device, a plurality of paging parameters are used in the calculation manner of determining the sending or receiving occasion of the paging message. The paging parameters include but are not limited to: a paging cycle T, a paging density N, a quantity Ns of paging occasions (paging occasions, POs) in each paging frame (paging frame, PF), and a quantity S of synchronization signal block (synchronization signal block, SSB) beams. The paging cycle may be a discontinuous reception (discontinuous reception, DRX) cycle. The paging density N may be a quantity of PFs in one paging cycle T. One PF may be one radio frame, or one PF may include a plurality of radio frames. For example, one PF may include two radio frames. When the PF includes a plurality of radio frames, a location of the PF indicates a location of a start frame of the PF. Each PF may include Ns POs, and the paging message is sent on the POs. The quantity of SSB beams may be a quantity of beams used to send a same paging message on one PO. In these beams, the same paging message is sent in different directions on the beams. FIG. 2 is a schematic diagram of paging parameters in an NR mobile communication system. As shown in FIG. 2, one paging cycle T may include one offset PF_offset and N PFs. PF_offset indicates an offset value (also referred to as an offset) of the paging frame, and is used to adjust a location of a paging frame in a paging cycle. For example, N may be half of a quantity of frames included in the paging cycle T. One PF includes Ns POs. Ns may be, for example, 4. If Ns is 4, assuming that the PF includes two radio frames, one radio frame may include 20 slots in the NR mobile communication system. Therefore, one PO may include 10 slots. In each PO, S beams may be used to send a paging message. S may be, for example, 7. As shown in the example in FIG. 2, in the 10 slots in each PO, seven slots may be used for downlink transmission. If S is 7, a paging message may be sent on a specific symbol in each slot used for downlink transmission by using a beam in a specific direction. As shown in the example in FIG. 2, the paging message is sent on the 4th to the 6th symbols in a slot 1 by using a beam in one direction, the paging message is sent on the 4th to the 6th symbols in a slot 2 by using a beam in another direction, and so on. Therefore, the paging message is sent in different directions by using the S beams.

It should be noted that values of the paging parameters shown in FIG. 2 are merely an example, and should not constitute any limitation on embodiments of this application.

The radio access network device side is used as an example. As described above, the radio access network device determines, in the preset calculation manner based on the paging parameter and the identifier of the terminal device, the paging occasion for delivering the paging message. The following describes a possible calculation manner.

First, the radio access network device calculates, according to the following formula (1), a PF for paging the terminal device:

$$(SFN + PF\_offset) \bmod T = (T \operatorname{div} N)*(UE\_ID \bmod N) \qquad (1)$$

SFN represents a system frame number (system frame number, SFN). PF_offset indicates an offset value (also referred to as an offset) of the paging frame, and is used to adjust a location of a paging frame in a paging cycle.

T represents the paging cycle T in the foregoing paging parameters, and a value of T is a smaller value of DRX broadcast in a system message and DRX indicated in the paging message.

N represents the paging density N in the foregoing paging parameters, and N = min(T, nB). nB represents a total quantity of PFs in one paging cycle. nB is a higher-layer configuration parameter, and the radio access network device may broadcast nB to the terminal device using the system message. A value of nB may be, for example, 4T, 2T, T, T/2, T/4, T/8, T/16, or T/32.

UE_ID indicates the identifier of the terminal device, and UE_ID = IMSI mod 1024. The IMSI is an international mobile subscriber identity (international mobile subscriber identification number, IMSI) of the terminal device.

div is a division function.

The mod function is a modulo function, and (SFN+PF_offset) mod T represents a remainder obtained by dividing (SFN+PF_offset) by T.

After obtaining the PF according to the foregoing formula (1), the radio access network device calculates, according to the following formula (2) and Table 1, a specific PO for paging the terminal device:

$$i\_s = \operatorname{floor}(UE\_ID/N) \bmod Ns \qquad (2)$$

i_s represents an index of a PO. Ns represents a quantity Ns of paging occasions in each paging frame in the foregoing paging parameters, and Ns = max(1, nB/T), that is, Ns is a larger one of 1 and nB/T. floorQ is a round-down function.

After i_s is calculated according to the foregoing formula (2), the PO is determined based on i_s by using the PF as a reference.

Based on the PO obtained according to the formula (2), the radio access network device may further determine, based on information such as the quantity S of SSB beams in the foregoing paging parameters, to send the paging message on specific beams and on specific symbols on the PO.

The terminal device side may correspondingly determine, in the foregoing calculation manner, how to receive the paging message. Details are not described again.

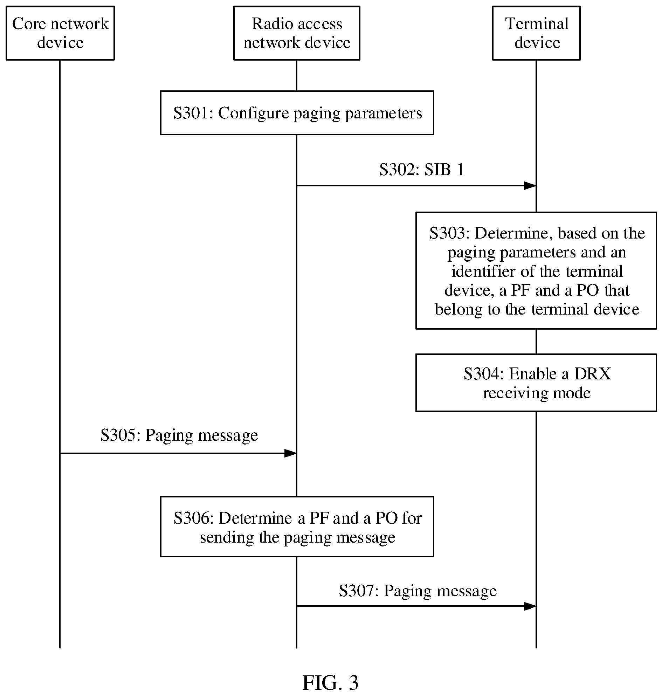

FIG. 3 is an interaction flowchart of sending a paging message based on paging parameters in a current technology. As shown in FIG. 3, a process of sending the paging message based on the paging parameters includes the following steps.

S301: A radio access network device configures the paging parameters.

The radio access device may configure the paging parameters in a manual configuration manner during system initialization or in other phases. For example, a value of each of the paging parameters may be manually input, and the radio access network device stores all the user-input values of the paging parameters.

After the paging parameters are configured, regardless of how a system state changes in a subsequent paging process, the radio access network device determines, based on the configured fixed paging parameters, an occasion, a beam, and the like for sending the paging message, until the paging parameters are adjusted in the manual configuration manner.

The system state of the radio access network in this embodiment of this application may be system load, paging load, or the like of the radio access network. The paging load may be a peak quantity of paging messages received by the radio access network device from a core network device within specified time.

S302: The radio access network device broadcasts the paging parameters to a terminal device by using a system information block 1 (system information block 1, SIB 1) message.

Correspondingly, the terminal device receives the paging parameters.

S303: The terminal device determines, based on the paging parameters and an identifier of the terminal device, a PF and a PO that belong to the terminal device.

S304: The terminal device enables a DRX receiving mode.

In each paging cycle T, the terminal device has only one PF and one PO for receiving the paging message.

S305: The core network device sends the paging message to the radio access network device.

S306: The radio access network device determines, in the foregoing calculation manner based on the paging parameters configured in step S301 and the identifier of the to-be-paged terminal device, a PF and a PO for sending the paging message.

S307: The radio access network device sends the paging message on the determined PO.

It can be learned from the procedure shown in FIG. 3 that, in a current technology, the paging parameters are configured in advance. After the configuration is completed, regardless of how a system state changes, the radio access network device determines, based on the configured paging parameters, the occasion for sending the paging message. When sending the paging message, the core network device needs to deliver the paging message in all cells within a tracking area (tracking area, TA). However, there are a large quantity of paging messages to be delivered by the core network. To ensure normal sending of the paging message, when configuring the paging parameters, the radio access network device needs to configure the paging parameters to meet maximum paging load. The paging load may be used to indicate a peak quantity of paging messages of the core network device. Consequently, the following two problems may occur.

1. Excessively large overheads of paging slots are caused.

In one PO, the radio access network uses all downlink slots to send the paging message. The PO shown in FIG. 2 is used as an example. The PO includes 10 slots, where there are six downlink slots (downlink slots, represented by D in FIG. 2), three uplink slots (uplink slots, represented by U in FIG. 2), and one special slot (special slot, represented by S in FIG. 2). S may be used as a downlink slot. Therefore, one PO may have seven downlink slots, and all the seven downlink slots are used to send the paging message. For example, a ratio of uplink frames to downlink frames is 1:4. Assuming that the paging cycle T is 128 radio frames, the paging density N is 64, the quantity Ns of POs in each PF is 1, and the quantity of SSB beams is 7, a quantity of paging slots is 7. In addition, the following formula (3) is used to calculate a proportion of paging slots in downlink slots (briefly referred to as proportion of paging slots).

$$\text{Proportion of paging slots} = N*Ns*S/\text{Total quantity of downlink slots in the cycle T} \quad (3)$$

When the ratio of uplink frames to downlink frames is 1:4, the paging cycle T is 128 radio frames, the paging density N is 64, and the quantity of SSB beams is 7, it may be obtained, by substituting the parameters in the foregoing example into the foregoing formula (3), that the proportion of paging slots is 21.88%. Therefore, it can be learned that 21.88% of the downlink slots are used to send the paging message, and overheads of the paging slots are large.

2. High paging energy consumption is caused.

Based on the foregoing descriptions, the radio access network determines the paging occasion based on the paging parameters and the identifier of the terminal device. Correspondingly, the radio access network device needs to send the paging message on the determined paging occasion. Because the paging parameters are preconfigured, and the determined paging occasion is a fixed occasion, the paging occasion still cannot sleep even in the case of small paging load. Consequently, paging energy consumption of the radio access network is high.

Based on the foregoing problem, an embodiment of this application provides a communication method. In the communication method, at least one paging cycle are combined into a paging cycle group, and different paging occasions in the paging cycle group serve different terminals devices. A radio access network device dynamically determines a sending location of paging information in the paging cycle group based on a peak quantity of paging messages of a core network device and a paging capability of the radio access network, and sends the paging information at the sending location, so that a paging occasion provided by the radio access network device matches a system state. In this way, paging slots can be reduced in the case of small paging load, to reduce overheads of the paging slots and paging energy consumption.

The method in this embodiment of this application is applicable to any mobile communication system, for example, an LTE communication system, an NR communication system, or another future communication system.

The following describes in detail the communication method provided in this embodiment of this application with reference to some embodiments. The following several embodiments may be combined with each other, and same or similar concepts or processes may not be described again in some embodiments.

For ease of description of this embodiment of this application, the following application documents describe this embodiment of this application by using an NR system as an example.

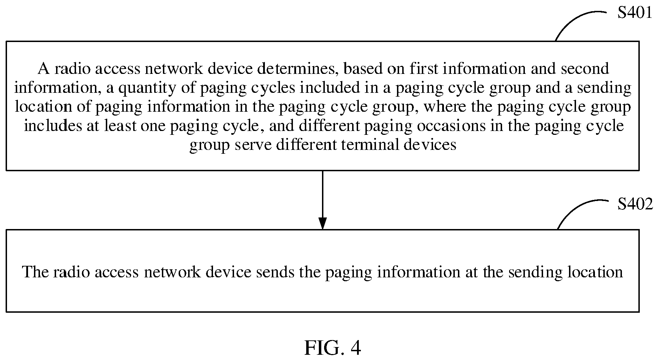

FIG. 4 is a schematic flowchart of a communication method according to an embodiment of this application. This embodiment relates to a process in which a radio access network device dynamically determines, based on first information and second information, a sending location of paging information in a paging cycle group. As shown in FIG.

4, the method includes the following steps.

S401: The radio access network device determines, based on the first information and the second information, a quantity of paging cycles included in a paging cycle group and a sending location of the paging information in the paging cycle group, where the paging cycle group includes at least one paging cycle, and different paging occasions in the paging cycle group serve different terminal devices.

The first information is used to indicate a peak quantity of paging messages from a core network device and paging messages generated by the radio access network device within specified time.

Optionally, the radio access network device may perform this step according to a specified cycle. For example, the radio access network device may perform this step at an interval of 5 minutes, and the specified cycle is 5 minutes. Accordingly, the foregoing specified time is 5 minutes. In each specified cycle, the radio access network device keeps monitoring a quantity of paging messages sent by the core network device to the radio access network device and a quantity of paging messages generated by the radio access network device in a unit time. The unit time may be measured in, for example, seconds. When the specified cycle ends, a maximum value of a sum of the quantities of the paging messages in a unit time is obtained, and the maximum value is used as a peak quantity of paging messages in a current cycle. The sum of the quantities of the paging messages is a sum of a quantity of paging messages from the core network device and a quantity of paging messages generated by the radio access network device in a unit time. A maximum quantity of pieces of paging that may need to be processed by the radio access network device can be learned of based on the peak quantity of the paging messages. The peak quantity of the paging messages may also be referred to as paging load of the radio access network device in the current cycle.

The second information is used to indicate a paging capability of the radio access network device.

Optionally, the paging capability may be a quantity of terminal devices that can be paged by the radio access network device in a unit time. The unit time may be measured in, for example, seconds. It should be understood that the unit time herein may be the same as or different from the unit time for monitoring the quantity of paging messages sent by the core network device. This is not limited in this embodiment of this application.

In an example, the radio access network device may calculate the paging capability of the radio access network device according to the following formula (4):

$$X = N*Ns*M/T \qquad (4)$$

X represents the paging capability, N represents a paging density N, Ns represents a quantity Ns of POs in each PS, M represents a quantity of terminal devices that can be simultaneously paged by using one paging message, and T represents a paging cycle T.

For example, M may be 32. To be specific, the radio access network device may simultaneously page 32 terminal devices by using one paging message.

It can be learned from the foregoing descriptions that, the peak quantity of the paging messages from the core network device and the paging messages generated by the radio access network device within the specified time can represent a quantity of paging messages that need to be processed by the radio access network device, namely, paging load of the radio access network device, where the peak quantity of the paging messages from the core network device and the paging messages generated by the radio access network device are indicated by the first information, and the paging capability indicated by the second information can represent a quantity of paging messages that can be processed by the access network device in a unit time. Based on the two types of information, the radio access network device may determine the quantity of the paging cycles included in the paging cycle group and the sending location of the paging information in the paging cycle group. The paging cycle group includes at least one paging cycle. In addition, different paging occasions in the paging cycle group serve different terminal devices, that is, one terminal device in a paging cycle group can use only one paging occasion. For ease of description, in this embodiment of this application, a quantity of paging cycles included in a paging cycle group is referred to as a length of the paging cycle group. The length of the paging cycle group may be adjusted to be greater than a current length in the case of small paging load. In addition, a terminal device still occupies only one paging occasion in the adjusted paging cycle group. Therefore, a density of paging occasions of the radio access network device can be reduced. In this way, the paging occasion matches the system state, and paging slots can be reduced in the case of small paging load, to reduce overheads of the paging slots and paging energy consumption.

It should be understood that the paging information may be information that may be received by the radio access network device from the core network device for paging terminal devices. The paging information is paging information not for a specific terminal device. The paging information may be carried in or indicated by, for example, a paging message.

Optionally, the sending location in the paging cycle group may be all locations that can be used to carry the paging information in the paging cycle group, but not one or a part of the locations.

S402: The radio access network device sends the paging information at the sending location.

Optionally, after receiving the paging information sent by the core network device, the radio access network device determines, according to the methods shown in the foregoing formula (1) and formula (2), the paging occasion for sending the paging information, determines the sending location in the paging cycle group based on the foregoing step S401, and sends the paging information on the foregoing paging occasion at the sending location. However, the terminal device still calculates the receiving occasions of the paging information according to the foregoing formula (1) and formula (2), and monitors and receives the paging message on these occasions. Therefore, the terminal device is unaware of the foregoing processing process of the radio access network device.

It should be understood that execution of the step S402 depends on the sending location obtained in the step S401, but the step S402 is not necessarily executed immediately after S401. The radio access network device may perform step S401 according to a specific cycle or triggered by a specific event, to determine the sending location. The specific event may be that, for example, the peak quantity of the paging messages and/or the paging capability changes. The foregoing step S402 may be performed when the radio access network device receives a message sent by the core network device, where the message is used to indicate to page a terminal device.

In this embodiment, the peak quantity of the paging messages from the core network device and the paging messages generated by the radio access network device within the specified time can represent a quantity of paging messages that need to be processed by the radio access network device, namely, paging load of the radio access network device, where the peak quantity of the paging messages from the core network device and the paging messages generated by the radio access network device within the specified time are indicated by the first information, and the paging capability indicated by the second information can represent a quantity of paging messages that can be processed by the access network device in a unit time. The two types of information can represent a system state of the radio access network. In addition, the radio access network device combines the at least one paging cycle into a paging cycle group, and different paging occasions in the paging cycle group serve different terminals devices. In different system states, a quantity of paging cycles included in the paging cycle group may be different. The radio access network device may determine, based on the first information and the second information, the length of the paging cycle group and the sending location of the paging information in the paging cycle group. The radio access network device may adjust the length of the paging cycle group to be greater than the current length in the case of small paging load. In addition, a terminal device still occupies only one paging occasion in the adjusted paging cycle group. Therefore, the density of paging performed by the radio access network device can be reduced. In this way, the paging occasion matches the system state, and paging slots can be reduced in the case of small paging load, to reduce overheads of the paging slots and paging energy consumption. Optionally, in the foregoing implementation, the terminal device may alternatively not need to be notified of the sending location finally determined by the radio access network device, and the terminal device may be paged based on a paging parameter initially delivered by the radio access network device (for example, refer to S301 to S304), so that signaling overheads can be reduced.

In the foregoing step S401, the sending location of the paging information in the paging cycle group may be determined in any one of the following manners.

In a first optional manner, the radio access network device may determine, based on only the first information and the second information, the quantity of the paging cycles included in the paging cycle group and the sending location of the paging information in the paging cycle group.

In this optional manner, the radio access network device may determine, based on only the first information and the second information (where other factors are not considered), the quantity of the paging cycles included in the paging cycle group and the sending location of the paging information in the paging cycle group.

In this manner, the quantity of the paging cycles included in the paging cycle group and the sending location of the paging information in the paging cycle group can be quickly determined based on the first information and the second information.

In a second optional manner, the radio access network device may determine, based on the first information, the second information, and third information, the quantity of the paging cycles included in the paging cycle group and the sending location of the paging information in the paging cycle group.

The third information is used to indicate system load of the radio access network device.

In an example, the system load of the radio access network device may be an occupied quantity, usage, and the like of resource blocks (resource blocks, RBs) in the radio access network device. In some other examples, the system load may alternatively be CPU usage, memory usage, and the like of the radio access network device.

In this optional manner, the radio access network device may keep monitoring the system load of the radio access network device while monitoring the quantity of the paging messages of the core network device. The system load may be a peak quantity of system load of the radio access network device in a unit time in the foregoing specified time, that is, in each cycle. The unit time may be the same as the unit time for monitoring the quantity of the paging messages of the core network device.

In the optional manner, when the radio access network device determines, based on the first information, the second information, and the third information, the quantity of the paging cycles included in the paging cycle group and the sending location of the paging information in the paging cycle group, processing may be performed in the following manner.

If the system load is less than a first preset threshold, the radio access network device determines, based on the first information and the second information, the quantity of the paging cycles included in the paging cycle group and the sending location of the paging information in the paging cycle group.

If the system load is less than the first preset threshold, it indicates that current system load of the radio access network device is small. In this case, the radio access network device re-determines, based on the first information and the second information, the quantity of the paging cycles included in the paging cycle group and the sending location of the paging information in the paging cycle group, to reduce paging slots and the paging capability in the case of small paging load. However, when the current system load of the radio access network device is large, even if the paging load is small and fewer paging slots is occupied, original paging slots may still be used for data transmission to support large system load, but system energy consumption cannot be reduced. Therefore, the radio access network device re-determines, based on the first information and the second information, the quantity of the paging cycles included in the paging cycle group and the sending location of the paging information in the paging cycle group only when the system load of the radio access network device is less than the first preset threshold, to determine a paging cycle group that matches the system load and the paging load, so that the adjustment of the length of the paging cycle group can really reduce the paging slots and the paging consumption in the case of small paging load.

For example, the system load is RB usage, an example process of determining whether the system load is less than the first preset threshold includes the following steps.

1. Calculate a quantity of RBs in each radio frame, which is denoted as totalRbNum.
2. Calculate a quantity of RBs in a time window for sending a common message in each radio frame, which is denoted as usedRbNum.
3. Calculate a ratio of usedRbNum to totalRbNum, where the result is denoted as usedRbRate_acceptable.
4. Calculate a difference between an actual RB usage (denoted as usedRbRate_cur) calculated by the radio access network device and the usedRbRate_acceptable. When the difference is less than the first preset threshold, it indicates that the current system load of the radio access network device is small, the value of the paging parameter may be determined still based on the first information and the second information.

The following describes a specific process of determining, based on the first information and the second information, the quantity of the paging cycles included in the paging cycle group and the sending location of the paging information in the paging cycle group in the foregoing two optional manners.

In the first optional manner, if the radio access network device determines that a ratio of the peak quantity of the paging messages to the paging capability is less than a second preset threshold, the radio access network device determines that the sending location of the paging information is a location in a first paging cycle group.

Optionally, a quantity of paging cycles included in the first paging cycle group is greater than a quantity of paging cycles included in a paging cycle group currently used by the radio access network device.

As described above, the peak quantity of the paging messages is a peak quantity of paging messages sent by the core network device to the radio access network device, the paging capability refers to a quantity of terminal devices that can be paged by the radio access network device in a unit time, and the ratio of the peak quantity of the paging messages to the paging capability may represent a load state used by the radio access network device for paging. The load state may represent a system state. In an example, in this embodiment of this application, there may be the following load states for paging: a normal state, a light-load state, and a no-load state. Each state corresponds to a range of the foregoing ratio. It should be understood that ratios in a range corresponding to the light-load state are less than ratios in a range corresponding to the normal state, and ratios in a range corresponding to the no-load state are less than ratios in a range corresponding to the light-load state.

Optionally, each case in which the radio access network device switches between different load states corresponds to a second preset threshold. For example, a case in which the radio access network device enters the light-load state from the normal state corresponds to a second preset threshold, and a case in which the radio access network device enters the no-load state from the light-load state corresponds to another second preset threshold.

When the radio access network device determines that the ratio of the peak quantity of the paging messages to the paging capability is less than a second preset threshold, it indicates that the radio access network device is in a load state corresponding to the second preset threshold. It should be noted that, in this embodiment of this application, being in a load state corresponding to the second preset threshold means that a load state changes to this load state from a previous state. When the load state changes to this load state, the radio access network device determines that a sending location of paging information is a location in a first paging cycle group, and a quantity of paging cycles included in the first paging cycle group is greater than a quantity of paging cycles included in a paging cycle group currently used by the radio access network device. In other words, compared with a length of a currently used paging cycle group, a length of the newly determined first paging cycle group is greater than the length of the currently used paging cycle group. Therefore, when the load state is relatively light, the length of the paging cycle group increases, so that a density of paging occasions of the radio access network device decreases, and overheads of paging slots and paging energy consumption are reduced.

For example, it is assumed that the radio access network device is currently in the normal state, and the length of the currently used paging cycle group is 7. When it is determined that the ratio of the peak quantity of the paging messages to the paging capability is less than a second preset threshold, the radio access network device may determine that the length of the used first paging cycle group is 8. It is assumed that the radio access network device is currently in the light-load state, and the length of the currently used paging cycle group is 8. When it is determined that the ratio of the peak quantity of the paging messages to the paging capability is less than another second preset threshold, the radio access network device may determine that the length of the used first paging cycle group is 9. In this example, the length of the paging cycle group may gradually increase when the radio access network device switches from the normal state to the light-load state, and then from the light-load state to the no-load state. In addition, in each paging cycle group, different paging occasions serve different terminal devices. Therefore, a density of paging occasions of the radio access network device gradually decreases, to match the system state of the radio access network device.

After determining that the load changes and determining that the new first paging cycle group needs to be used, the radio access network device can learn of a location that may be used to carry the paging information in the first paging cycle group, and determine to send the paging information at the location.

The location that may be used to carry the paging information in the first paging cycle group may include at least one paging cycle in the first paging cycle group, or at least one paging frame in the at least one paging cycle in the first paging cycle group, or at least one paging occasion in the at least one paging frame in the at least one paging cycle in the first paging cycle group. Specific information about the location is described in detail in the following embodiments.

In the second optional manner, if the radio access network device determines that a ratio of the peak quantity of the paging messages to the paging capability is greater than a third preset threshold, the radio access network device determines that the sending location of the paging information is a location in a second paging cycle group.

Optionally, a quantity of paging cycles included in the second paging cycle group is less than a quantity of paging cycles included in a paging cycle group currently used by the radio access network device.

As described above, the peak quantity of the paging messages is a peak quantity of paging messages sent by the core network device to the radio access network device, the paging capability refers to a quantity of terminal devices that can be paged by the radio access network device in a unit time, and the ratio of the peak quantity of the paging messages to the paging capability may represent a load state used by the radio access network device for paging. The load state may represent a system state. In an example, in this embodiment of this application, there may be the following load states for paging: a normal state, a light-load state, and a no-load state. Each state corresponds to a range of the foregoing ratio. It should be understood that ratios in a range corresponding to the normal state are greater than ratios in a range corresponding to the light-load state, and ratios in a range corresponding to the light-load state are greater than ratios in a range corresponding to the no-load state.

Optionally, each case in which the radio access network device switches between different load states corresponds to a third preset threshold. For example, a case in which the radio access network device enters the light-load state from the no-load state corresponds to a third preset threshold, and a case in which the radio access network device enters the normal state from the light-load state corresponds to another third preset threshold.

When the radio access network device determines that the ratio of the peak quantity of the paging messages to the paging capability is greater than a third preset threshold, it indicates that the radio access network device is in a load state corresponding to the third preset threshold. It should be noted that, in this embodiment of this application, being in a load state corresponding to the third preset threshold means that a load state changes to this load state from a previous state. When the load state changes to this load state, the radio access network device determines that a sending location of paging information is a location in a second paging cycle group, and a quantity of paging cycles included in the second paging cycle group is less than a quantity of paging cycles included in a paging cycle group currently used by the radio access network device. In other words, compared with a length of a currently used paging cycle group, a length of the newly determined second paging cycle group is less than the length of the currently used paging cycle group. Therefore, when the load state is relatively heavy, the length of the paging cycle group decreases, so that a density of paging occasions of the radio access network device increases, to ensure timely sending of the paging information without delay.

For example, it is assumed that the radio access network device is currently in the no-load state, and the length of the currently used paging cycle group is 9. When it is determined that the ratio of the peak quantity of the paging messages to the paging capability is greater than a third preset threshold, the radio access network device may determine that the length of the used second paging cycle group is 8. It is assumed that the radio access network device is currently in the light-load state, and the length of the currently used paging cycle group is 8. When it is determined that the ratio of the peak quantity of the paging messages to the paging capability is greater than another third preset threshold, the radio access network device may determine that the length of the used second paging cycle group is 7. In this example, the length of the paging cycle group may gradually decrease when the radio access network device switches from the no-load state to the light-load state, and then from the light-load state to the normal state. In addition, in each paging cycle group, different paging occasions serve different terminal devices. Therefore, a density of paging occasions of the radio access network device gradually increases, to match the system state of the radio access network device.

After determining that the load changes and determining that the new second paging cycle group needs to be used, the radio access network device can learn of a location that may be used to carry the paging information in the second paging cycle group, and determine to send the paging information at the location.

The location that may be used to carry the paging information in the second paging cycle group may include at least one paging cycle in the first paging cycle group, or may include at least one paging frame in the at least one paging cycle in the first paging cycle group, or may include at least one paging occasion in the at least one paging frame in the at least one paging cycle in the first paging cycle group. Specific information about the location is described in detail in the following embodiments.

The following describes the locations that may be used to carry the paging information in the first paging cycle group and the second paging cycle group.

For ease of description, in the following, the location that may be used to carry the paging information in the first paging cycle group is referred to as a paging location in the first paging cycle group, and the location that may be used to carry the paging information in the second paging cycle group is referred to as a paging location in the second paging cycle group.

As described above, the paging location in the first paging cycle group may include at least one paging cycle in the first paging cycle group, or at least one paging frame in the at least one paging cycle in the first paging cycle group, or at least one paging occasion in the at least one paging frame in the at least one paging cycle in the first paging cycle group. The paging location in the second paging cycle group may include at least one paging cycle in the first paging cycle group, or at least one paging frame in the at least one paging cycle in the first paging cycle group, or at least one paging occasion in the at least one paging frame in the at least one paging cycle in the first paging cycle group.

The first paging cycle group is used as an example, where meanings of the foregoing three paging locations are as follows.

1. At least one paging cycle

That the paging location includes at least one paging cycle in the first paging cycle group means that paging information is sent only in the at least one paging cycle in the first paging cycle group. The at least one paging cycle may be referred to as a paging active period of the first paging cycle group, and a paging cycle other than the at least one paging cycle in the first paging cycle group may be referred to as a paging dormant period of the first paging cycle group. If the radio access network device receives the paging information from the core network in the paging dormant period, the radio access network device buffers the paging information. The radio access network device sends the buffered paging information in the paging occasion in the at least one paging cycle when the radio access network device is in the paging active period.

In this manner, the paging information is aggregated into the at least one paging cycle in the first paging cycle group for sending, which may be referred to as aggregation between paging cycles. It should be understood that a paging occasion that can be provided by the at least one paging cycle should meet a paging occasion that can be provided by one paging cycle when the aggregation manner is not used.

2. At least one paging frame in the at least one paging cycle

That the paging location includes at least one paging frame in the at least one paging cycle in the first paging cycle group means that the paging information is sent only on the at least one paging frame in the at least one paging cycle in the first paging cycle group. The at least one paging frame in the at least one paging cycle may be referred to as a paging active period of the paging cycle, and a paging frame other than the at least one paging frame in the at least one paging cycle in the first paging cycle group may be referred to as a paging dormant period.

In an example, the paging location may include at least one paging frame in each paging cycle in the first paging cycle group. In this case, the at least one paging frame in each paging cycle is the paging active period, and a paging frame other than the at least one paging frame in each paging cycle in the first paging cycle group is the paging dormant period.

If the radio access network device receives the paging information from the core network in the paging dormant period, the radio access network device buffers the paging information. The radio access network device sends the buffered paging information in the paging occasion in the at least one paging frame when the radio access network device is in the paging active period.

In this manner, the paging information is aggregated into at least one paging frame in the at least one paging cycle in the first paging cycle group for sending, which may be referred to as aggregation between paging frames. It should be understood that a total quantity of paging occasions that can be provided by the at least one paging frame in the at least one paging cycle should meet paging occasions that can be provided by one paging cycle when the aggregation manner is not used.

3. At least one paging occasion in the at least one paging frame in the at least one paging cycle

That the paging location includes at least one paging occasion in the at least one paging frame in the at least one paging cycle in the first paging cycle group means that the paging information is sent only on the at least one paging occasion in the at least one paging frame in the at least one paging cycle in the first paging cycle group. The at least one paging occasion in the at least one paging frame may be referred to as a paging active period of the paging cycle, and a paging occasion other than the at least one paging occasion in the at least one paging frame in the at least one paging cycle in the first paging cycle group may be referred to as a paging dormant period.

In an example, the paging location may include at least one paging occasion in each paging frame in each paging cycle in the first paging cycle group. In this case, the at least one paging occasion in each paging frame in each paging cycle is the paging active period, and a paging occasion other than the at least one paging occasion in each paging frame in each paging cycle in the first paging cycle group is the paging dormant period.

If the radio access network device receives the paging information from the core network in the paging dormant period, the radio access network device buffers the paging information, and sends the buffered paging information in the at least one paging occasion when the radio access network device is in the paging active period.

In this manner, the paging information is aggregated into at least one occasion in at least one paging frame in the at least one paging cycle in the first paging cycle group for sending, which may be referred to as aggregation between paging occasions. It should be understood that a total quantity of paging occasions that can be provided by the at least one paging occasion in the at least one paging frame in the at least one paging cycle should meet paging occasions that can be provided by one paging cycle when the aggregation manner is not used.

Meanings of the three paging locations in the second paging cycle group are the same as the meanings of the three paging locations in the first paging group, and details are not described again.

During specific implementation, for the first paging cycle group, a paging location in the first paging cycle group may be one of the at least one paging cycle, the at least one paging frame, and the at least one paging occasion, or may be a combination of two or three of the three locations.

For the second paging cycle group, a paging location in the second paging cycle group may be one of the at least one paging cycle, the at least one paging frame, and the at least one paging occasion, or may be a combination of two or three of the three locations.

Optionally, the radio access network device may configure, by using a configuration parameter, the locations that can be used to carry the paging information in the first paging cycle group and the second paging cycle group. Each configuration parameter corresponds to one configuration manner. For example, a configuration parameter 1 indicates that the paging location in the first paging cycle group or the second paging cycle group is the at least one paging cycle, a configuration parameter 2 indicates that the paging location in the first paging cycle group or the second paging cycle group is the at least one paging frame, a configuration parameter 3 indicates that the paging location of the first paging cycle group or the second paging cycle group is the at least one paging occasion, and a configuration parameter 4 indicates that the paging location of the first paging cycle group or the second paging cycle group is a location obtained by combining the at least one paging cycle and the at least one paging frame.

Optionally, the first paging cycle group and the second paging cycle group may use a same configuration manner, or may use different configuration manners.

In an example, the first paging cycle group and the second paging cycle group use a same configuration manner, and both are configured based on the configuration parameter 1. In this case, the paging location in the first paging cycle group and the paging location in the second paging cycle group are both the at least one paging cycle.

In another example, the first paging cycle group and the second paging cycle group use different configuration manners. To be specific, the first paging cycle group is configured based on the configuration parameter 1, so that the paging location in the first paging cycle group is the at least one paging cycle; and the second paging cycle group is configured based on the configuration parameter 2, so that the paging location in the second paging cycle group is the at least one paging frame.

The following separately provides examples of the foregoing three paging locations and a combination thereof. For ease of description, the following examples are all described by using the first paging cycle as an example. It should be understood that the following examples may also be applied to the second paging cycle.

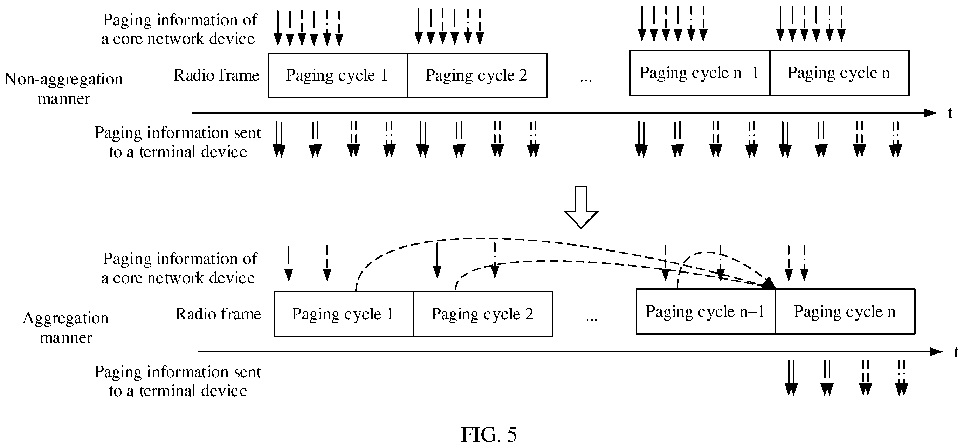

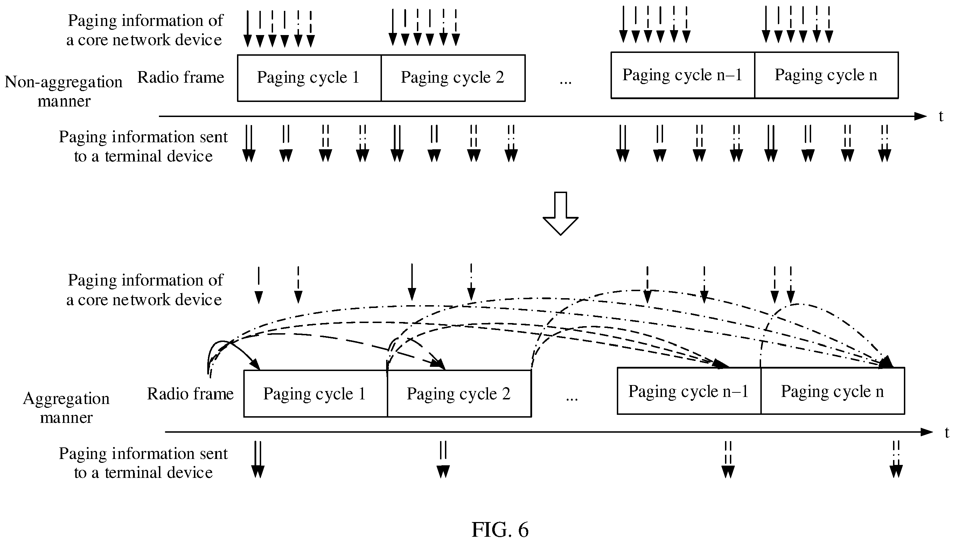

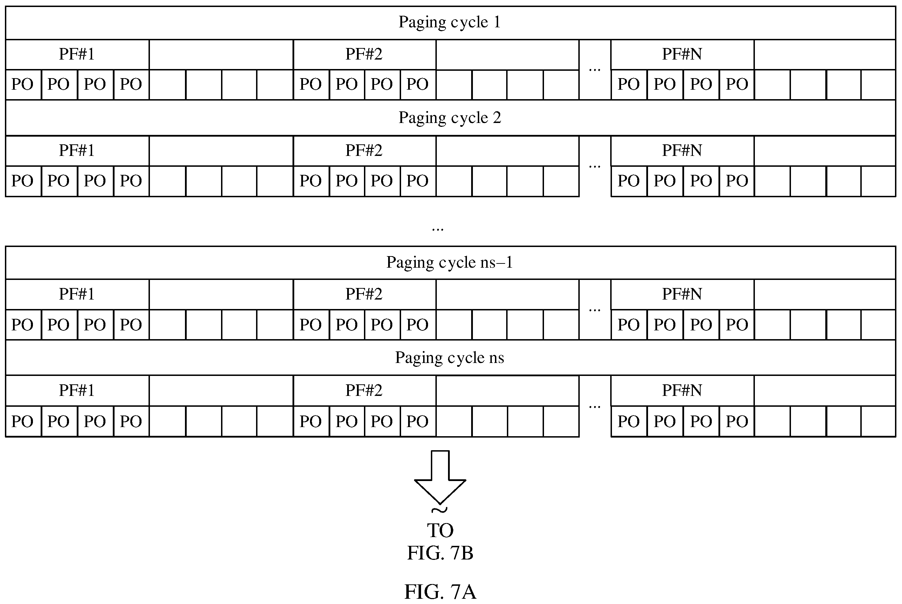

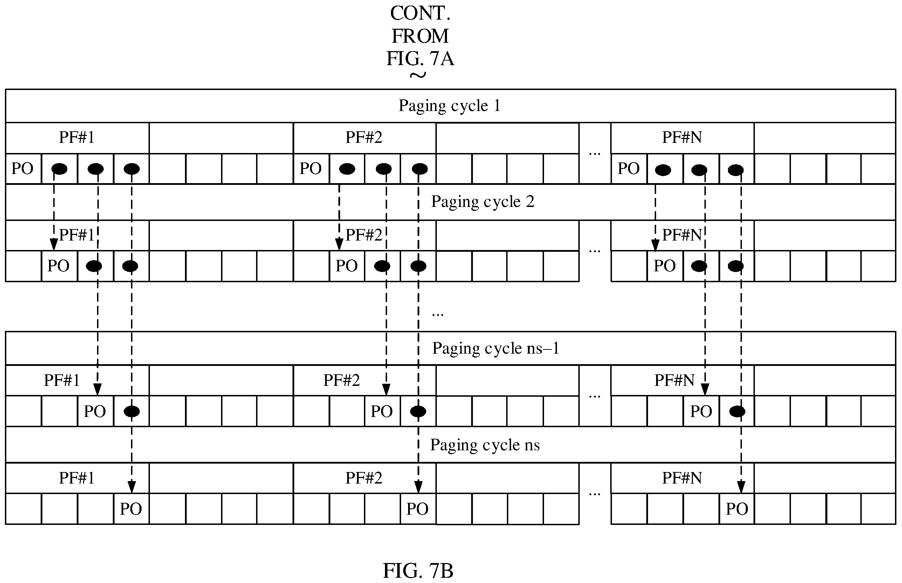

FIG. 5 shows an example in which a paging location is at least one paging cycle in a first paging cycle group. As shown in FIG. 5, the upper part shows paging locations in a current technology in which no aggregation manner is used, and the lower part shows paging locations for which the aggregation manner in this embodiment of this application is used. The following descriptions are all descriptions of the paging location in the aggregation manner. The following descriptions of FIG. 6, FIG. 7A, and FIG. 7B are also descriptions of paging locations in the case of using the aggregation manner. Details are not described again. A length of the first paging cycle group is n, that is, the first paging cycle group includes n paging cycles, where n is an integer greater than 0. In the first paging cycle group, only the $n^{th}$ paging cycle is a paging active period, and the remaining first to (n-1)th paging cycles are a paging dormant period. After receiving paging information in a paging dormant period, the radio access network device buffers the paging information. When a paging active period arrives, the radio access network device may determine, according to the methods shown in the foregoing formula (1) and formula (2), a paging occasion for sending each piece of paging information, and sends each piece of paging information on the paging occasion in the $n^{th}$ paging cycle, so that the paging information is aggregated into the last paging cycle in the first paging cycle group for sending. It should be understood that a paging occasion that can be provided in the paging active period, namely, the $n^{th}$ paging cycle, should meet the paging occasion obtained based on the paging cycle T, the paging density N, and the quantity of the paging occasions shown in FIG. 2, to ensure that the radio access network device can normally send, to the terminal device, the paging information sent by the core network device. For example, the paging occasion in the $n^{th}$ paging cycle is the same as the paging occasion obtained based on the paging cycle T, the paging density N, and the quantity of the paging occasions shown in FIG. 2.

FIG. 6 shows an example in which a paging location is at least one paging frame in at least one paging cycle in a first paging cycle group. As shown in FIG. 6, a length of the first paging cycle group is n, that is, the first paging cycle group includes n paging cycles, where n is an integer greater than 0. In the first paging cycle group, 1/n time windows are selected in each paging cycle as a paging active period, the 1/n time windows are one paging frame, and the remaining (n-1)/n time windows in each paging cycle are used as a paging dormant period. As shown in FIG. 6, the $1^{st}$ paging frame in the $1^{st}$ paging cycle is selected as the paging active period, the $2^{nd}$ paging frame in the $2^{nd}$ paging cycle group is selected as the paging active period, and so on.

After receiving paging information in a paging dormant period, the radio access network device buffers the paging information. When a paging active period arrives, the radio access network device may determine, according to the methods shown in the foregoing formula (1) and formula (2), a paging occasion for sending each piece of paging information, and sends the paging information on the paging occasion in a paging frame corresponding to the 1/n time windows, so that the paging information is aggregated into some paging frames in the first paging cycle group for sending. It should be understood that a total quantity of paging occasions that can be provided in each paging active period should meet the paging occasion obtained based on the paging cycle T, the paging density N, and the quantity of the paging occasions shown in FIG. 2, to ensure that the radio access network device can normally send, to the terminal device, the paging information sent by the core network device. As shown in FIG. 6, the $1^{st}$ paging frame in the $1^{st}$ paging cycle is selected as the paging active period, the $2^{nd}$ paging frame in the $2^{nd}$ paging cycle group is selected as the paging active period, and so on, so that the paging location in the first paging cycle group can cover the paging occasion required in FIG. 2.

FIG. 7A and FIG. 7B show an example in which a paging location is at least one paging occasion in at least one paging frame in at least one paging cycle in a first paging cycle group. As shown in FIG. 7A and FIG. 7B, a length of the first paging cycle group is ns, that is, the first paging cycle group includes ns paging cycles, ns is an integer greater than 0 (for example, 4 in FIG. 7A and FIG. 7B), each paging cycle includes N paging frames, and N is an integer greater than 0. In the first paging cycle group, 1/ns time windows are selected in each paging frame in each paging cycle as a paging active period, the 1/ns time windows are one paging occasion, and the remaining (ns-1)/ns time windows in each paging frame in each paging cycle are used as a paging dormant period. As shown in FIG. 7A and FIG. 7B, the $1^{st}$ paging occasion of each paging frame in the $1^{st}$ paging cycle is selected as the paging active period, the $2^{nd}$ paging occasion of each paging frame in the $2^{nd}$ paging cycle group is selected as the paging active period, and so on.

After receiving paging information in a paging dormant period, the radio access network device buffers the paging information. When a paging active period arrives, the radio access network device may determine, according to the methods shown in the foregoing formula (1) and formula (2), a paging occasion for sending each piece of paging information, and sends the paging information on the paging occasion corresponding to the 1/ns time windows, so that the paging information is aggregated into some paging occasions in the first paging cycle group for sending. It should be understood that a total quantity of paging occasions that can be provided in each paging active period should meet the paging occasion obtained based on the paging cycle T, the paging density N, and the quantity of the paging occasions shown in FIG. 2, to ensure that the radio access network device can normally send, to the terminal device, the paging information sent by the core network device. As shown in FIG. 7A and FIG. 7B, the $1^{st}$ paging occasion in each paging frame in the $1^{st}$ paging cycle is selected as the paging active period, the $2^{nd}$ paging occasion in each paging frame in the $2^{nd}$ paging cycle group is selected as the paging active period, and so on, so that the paging location in the first paging cycle group can cover the paging occasion required in FIG. 2.

A combination of the paging locations may also be used as the paging location, in addition to the paging location obtained in any manner shown in FIG. 5 to FIG. 7B.

In an example, the aggregation between paging cycles may be combined with the aggregation between paging frames. For example, if the length of the first paging cycle group is S, 2/S paging cycles may be selected in the first paging cycle group. In the 2/S paging cycles, two paging frames are selected from each of the 2/S paging cycles as the paging active period. In addition, paging frames used as paging active periods in the paging cycles may be different, so that the paging location in the first paging cycle group can cover the paging occasion required in FIG. 2.

The following describes, by using a complete procedure, a process of determining, based on the first information, second information, and third information, a quantity of paging cycles included in a paging cycle group and a sending location of paging information in the paging cycle group.

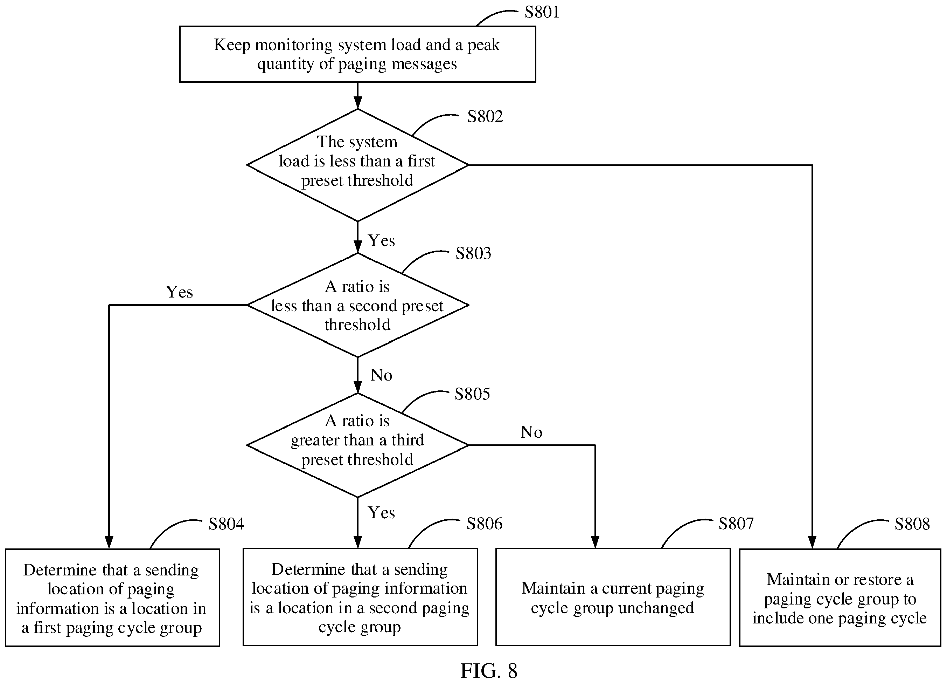

FIG. 8 is a schematic flowchart of a communication method according to an embodiment of this application. As shown in FIG. 8, a process of determining, based on first information, second information, and third information, a quantity of paging cycles included in a paging cycle group and a sending location of paging information in the paging cycle group includes:

S801: A radio access network device keeps monitoring system load and a peak quantity of paging messages.

S802: If the system load is less than a first preset threshold, perform step S803; otherwise, perform step S808.

S803: If a ratio of the peak quantity of the paging messages to a paging capability is less than a second preset threshold, perform step S804; otherwise, perform step S805.

S804: Determine that the sending location of the paging information is a location in a first paging cycle group.

S805: If a ratio of the peak quantity of the paging messages to a paging capability is greater than a third preset threshold, perform step S806; otherwise, perform step S807.

S806: Determine that the sending location of the paging information is a location in a second paging cycle group.

S807: Maintain a current paging cycle group unchanged.

S808: Maintain or restore a paging cycle group to include one paging cycle.

In this step, if the current paging cycle group includes one paging cycle, the value remains unchanged; if a length of the current paging cycle group is adjusted to include a plurality of paging cycles, the length of the current paging cycle group is restored to include one paging cycle.

For a specific execution process of the foregoing steps, refer to the foregoing embodiments, and details are not described herein again.

Based on the determined quantity of the paging cycles included in the paging cycle group and the determined sending location of the paging information in the paging cycle group, the core network device may send and receive the paging information according to the following procedure after sending the paging information to the radio access network device.

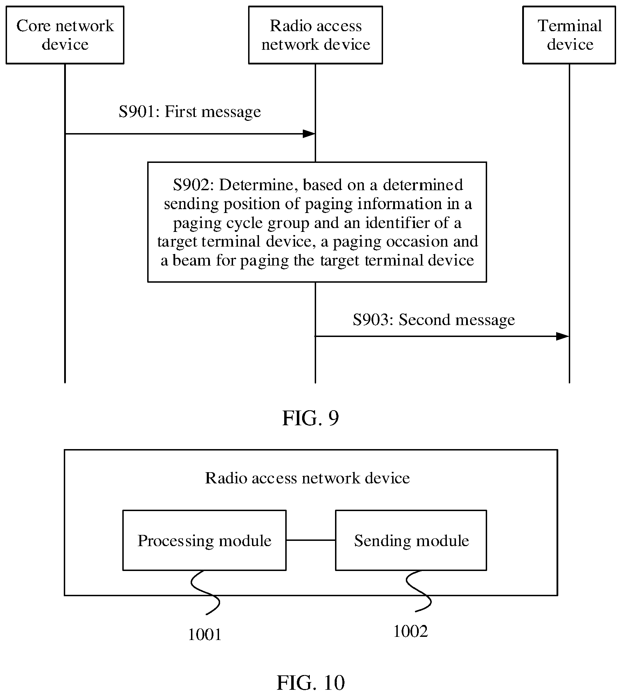

FIG. 9 is a flowchart of paging information exchange in a communication method according to an embodiment of this application. As shown in FIG. 9, a paging information exchange procedure includes the following steps.

S901: A core network device sends a first message to a radio access network device, where the first message is used to indicate the radio access network device to page a target terminal device.

Accordingly, the radio access network device receives the first message.

Optionally, the first message may be a paging message.

S902: The radio access network device determines, based on a determined sending location of paging information in a paging cycle group and an identifier of the target terminal device, a paging occasion and a beam for paging the target terminal device.

Optionally, the identifier of the target terminal device may be carried in the first message.

Optionally, the radio access network device may determine the paging occasion according to the foregoing formula (1) and formula (2), and determine the beam based on a quantity of beams.

S903: The radio access network device sends a second message to the target terminal device based on the paging occasion and the beam for paging the target terminal device, where the second message is used to page the target terminal device.

Accordingly, the target terminal device receives the second message.

Optionally, the second message may be a paging message.

After determining the paging occasion and the beam, the radio access network device sends the paging message to the target terminal device on the paging occasion by using the determined beam.

Correspondingly, the target terminal device determines, based on the identifier of the target terminal device and a pre-obtained value of a paging parameter, an occasion for receiving the second message, receives the second message on the occasion, and performs subsequent processing on the second message such as parsing.

FIG. 10 is a schematic diagram of a structure of a radio access network device according to an embodiment of this application. As shown in FIG. 10, the radio access network device includes a processing module 1001 and a sending module 1002.

The processing module 1001 is configured to: determine, based on first information and second information, a quantity of paging cycles included in a paging cycle group and a sending location of paging information in the paging cycle group, where the paging cycle group includes at least one paging cycle, and different paging occasions in the paging cycle group serve different terminal devices. The first information is used to indicate a peak quantity of paging messages from a core network device and paging messages generated by the radio access network device within specified time, and the second information is used to indicate a paging capability of the radio access network device.

The sending module 1002 is configured to send the paging information at the sending location.

In a possible implementation, the processing module 1001 is specifically configured to:

determine, based on the first information, the second information, and third information, the quantity of the paging cycles included in the paging cycle group and the sending location of the paging information in the paging cycle group.

The third information is used to indicate system load of the radio access network device.

In the possible implementation, the processing module 1001 is specifically configured to:

when the system load is less than a first preset threshold, determine, based on the first information and the second information, the quantity of the paging cycles included in the paging cycle group and the sending location of the paging information in the paging cycle group.

In a possible implementation, the processing module 1001 is specifically configured to:

when a ratio of the peak quantity of the paging messages to the paging capability is less than a second preset threshold, determine that the sending location of the paging information is a location in a first paging cycle group.

In a possible implementation, a quantity of paging cycles included in the first paging cycle group is greater than a quantity of paging cycles included in a paging cycle group currently used by the radio access network device.

In a possible implementation, the processing module 1001 is specifically configured to:

when a ratio of the peak quantity of the paging messages to the paging capability is greater than a third preset threshold, determine that the sending location of the paging information is a location in a second paging cycle group.

In the possible implementation, a quantity of paging cycles included in the second paging cycle group is less than a quantity of paging cycles included in a paging cycle group currently used by the radio access network device.

In a possible implementation, the sending location includes at least one paging cycle in the paging cycle group.

In a possible implementation, the sending location includes at least one paging frame in the at least one paging cycle in the paging cycle group.

In a possible implementation, the sending location includes at least one paging occasion in at least one paging frame in the at least one paging cycle in the paging cycle group.

Still refer to FIG. 10. In a possible implementation, the radio access network device further includes a receiving module 1003.

The receiving module 1003 is configured to receive a first message sent by the core network device, where the first message is used to indicate the radio access network device to page a target terminal device.

The sending module 1002 is specifically configured to send a second message to the target terminal device at a location that belongs to the target terminal device and that is in the sending location, where the second message is used to page the target terminal device.

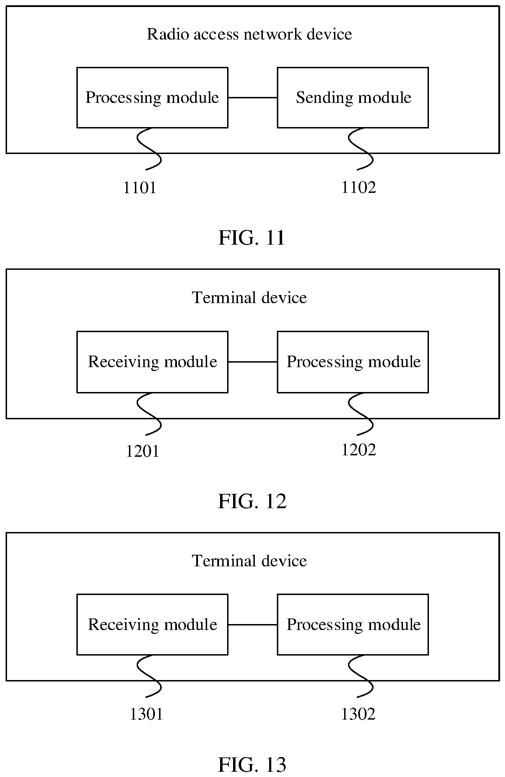

FIG. 11 is another schematic diagram of a structure of a radio access network device according to an embodiment of this application. As shown in FIG. 11, the radio access network device includes a processing module 1101 and a sending module 1102.

The processing module 1101 is configured to: determine, based on third information, a quantity of paging cycles included in a paging cycle group and a sending location of paging information in the paging cycle group, where the paging cycle group includes at least one paging cycle, different paging occasions in the paging cycle group serve different terminals, and the third information is used to indicate system load of the radio access network device.

The sending module 1102 is configured to send the paging information at the sending location.

In a possible implementation, the processing module 1101 is specifically configured to:

when the system load is greater than or equal to a first preset threshold, determine that the sending location of the paging information is a location in a third paging cycle group.

In a possible implementation, the third paging cycle group includes a paging cycle.

In a possible implementation, the sending location includes at least one paging cycle in the paging cycle group.

In a possible implementation, the sending location includes at least one paging frame in the at least one paging cycle in the paging cycle group.

In a possible implementation, the sending location includes at least one paging occasion in at least one paging frame in the at least one paging cycle in the paging cycle group.

Still refer to FIG. 11. In a possible implementation, the radio access network device further includes a receiving module 1103.

The receiving module 1103 is configured to receive a first message sent by the core network device, where the first message is used to indicate the radio access network device to page a target terminal device.

The sending module 1102 is specifically configured to send a second message to the target terminal device at a location that belongs to the target terminal device and that is in the sending location, where the second message is used to page the target terminal device.

The radio access network device provided in this embodiment of this application may perform the actions of the radio access network device in the foregoing method embodiment. Implementation principles and technical effects of this embodiment are similar to those of the foregoing method embodiment. Details are not described herein again.

FIG. 12 is a schematic diagram of a structure of a terminal device according to an embodiment of this application. As shown in FIG. 12, the terminal device includes a receiving module 1201. In a possible implementation, the terminal device further includes a processing module 1202.

The receiving module 1201 is configured to receive paging information at a sending location, where the sending location is a sending location in a paging cycle group, the paging cycle group includes at least one paging cycle, and different paging occasions in the paging cycle group serve different terminal devices.

A quantity of paging cycles included in the paging cycle group and the sending location in the paging cycle group are determined by a radio access network device based on first information and second information, the first information is used to indicate a peak quantity of paging messages from a core network device and paging messages generated by the radio access network device within specified time, and the second information is used to indicate a paging capability of the radio access network device.

The processing module 1202 is configured to perform processing on the received paging information such as parsing.

In a possible implementation, the quantity of the paging cycles included in the paging cycle group and the sending location in the paging cycle group are determined by the radio access network device based on the first information, the second information, and third information.

The third information is used to indicate system load of the radio access network device.

In a possible implementation, the sending location includes at least one paging cycle in the paging cycle group.

In a possible implementation, the sending location includes at least one paging frame in the at least one paging cycle in the paging cycle group.

In a possible implementation, the sending location includes at least one paging occasion in at least one paging frame in the at least one paging cycle in the paging cycle group.

The receiving module 1201 is specifically configured to:

receive a second message at a location that belongs to the terminal device and that is in the sending location, where the second message is used to page the terminal device.

FIG. 13 is another schematic diagram of a structure of a terminal device according to an embodiment of this application. As shown in FIG. 13, the terminal device includes a receiving module 1301. In a possible implementation, the terminal device further includes a processing module 1302.

The receiving module 1301 is configured to receive paging information at a sending location, where the sending location is a sending location in a paging cycle group, the paging cycle group includes at least one paging cycle, and different paging occasions in the paging cycle group serve different terminal devices.

A quantity of paging cycles included in the paging cycle group and the sending location in the paging cycle group are determined by a radio access network device based on third information, and the third information is used to indicate system load of the radio access network device.

The processing module 1202 is configured to perform processing on the received paging information such as parsing.

In a possible implementation, the sending location includes at least one paging cycle in the paging cycle group.

In a possible implementation, the sending location includes at least one paging frame in the at least one paging cycle in the paging cycle group.

In a possible implementation, the sending location includes at least one paging occasion in at least one paging frame in the at least one paging cycle in the paging cycle group.

In a possible implementation, the receiving module 1201 is specifically configured to:

receive a second message at a location that belongs to the terminal device and that is in the sending location, where the second message is used to page the terminal device.

The terminal device provided in this embodiment of this application may perform the actions of the terminal device in the foregoing method embodiment. Implementation principles and technical effects of this embodiment are similar to those of the foregoing method embodiment. Details are not described herein again.

It should be noted and understood that division into the modules of the foregoing apparatus is merely logic function division. During an actual implementation, some or all modules may be integrated into one physical entity, or the modules may be physically separated. In addition, all these modules may be implemented in a form of software invoked by a processing element, or may be implemented in a form of hardware. Alternatively, a part of modules may be implemented in a form of software invoked by a processing element, and a part of modules are implemented in a form of hardware. For example, a determining module may be an independently disposed processing element, or may be integrated in a chip of the foregoing apparatus for implementation. In addition, the determining module may alternatively be stored in a memory of the foregoing apparatus in a form of program code and invoked by a processing element of the foregoing apparatus to perform a function of the determining module. An implementation of another module is similar to the implementation of the determining module. In addition, all or some of these modules may be integrated together, or may be implemented independently. The processing element described herein may be an integrated circuit, and has a signal processing capability. In an implementation process, steps in the foregoing methods or the foregoing modules may be implemented by using a hardware integrated logical circuit in the processing element, or by using instructions in a form of software.

For example, the foregoing modules may be configured as one or more integrated circuits for implementing the foregoing methods, such as one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of program code invoked by a processing element, the processing element may be a general-purpose processor, for example, a central processing unit (central processing unit, CPU) or another processor that can invoke the program code. For another example, these modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instruction is loaded and executed on a computer, all or a part of the procedures or functions according to the embodiments of this application are generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

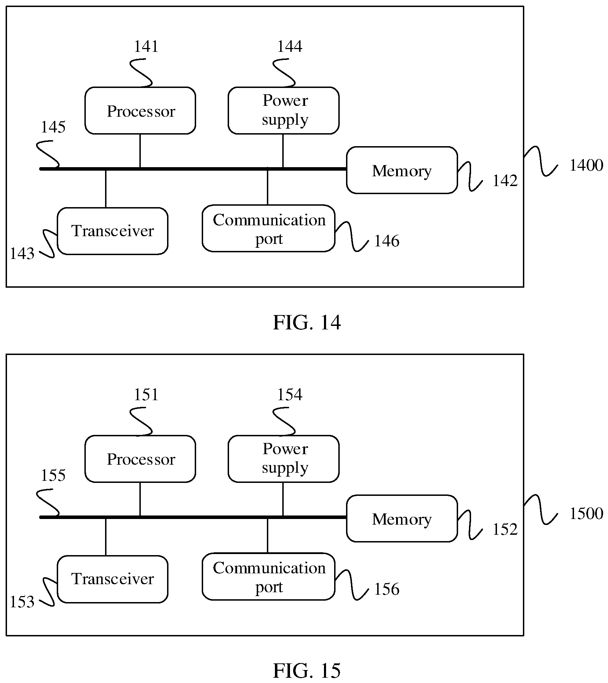

FIG. 14 is a schematic diagram of a structure of a radio access network device according to an embodiment of this application. As shown in FIG. 14, the radio access network device 1400 may include a processor 141 (for example, a CPU), a memory 142, and a transceiver 143. The transceiver 143 is coupled to the processor 141, and the processor 141 controls sending and receiving actions of the transceiver 143. The memory 142 may store various instructions, to complete various processing functions and implement method steps performed by the radio access network device in this embodiment of this application. Optionally, the radio access network device in this embodiment of this application may further include a power supply 144, a system bus 145, and a communication port 146. The transceiver 143 may be integrated into a transceiver of the radio access network device, or may be an independent transceiver antenna on the radio access network device. The system bus 145 is configured to implement communication connections between components. The communication port 146 is configured to implement a connection and communication between the radio access network device and another peripheral.

In this embodiment of this application, the processor 141 is coupled to the memory 142, and is configured to read and execute instructions in the memory 142, to implement the method steps performed by the radio access network device in the foregoing method embodiments. The transceiver 143 is coupled to the processor 141, and the processor 141 controls the transceiver 143 to send and receive a message.

In one manner, the processor 141 is configured to:

determine, based on first information and second information, a quantity of paging cycles included in a paging cycle group and a sending location of paging information in the paging cycle group, and control the transceiver 143 to send the paging information at the sending location, where the paging cycle group includes at least one paging cycle, and different paging occasions in the paging cycle group serve different terminal devices. The first information is used to indicate a peak quantity of paging messages from a core network device and paging messages generated by the radio access network device within specified time, and the second information is used to indicate a paging capability of the radio access network device.

In this manner, optionally, the processor 141 is specifically configured to:

determine, based on the first information, the second information, and third information, the quantity of the paging cycles

20

included in the paging cycle group and the sending location of the paging information in the paging cycle group. The third information is used to indicate system load of the radio access network device.

In this manner, optionally, the processor 141 is specifically configured to:

when the system load is less than a first preset threshold, determine, based on the first information and the second information, the quantity of the paging cycles included in the paging cycle group and the sending location of the paging information in the paging cycle group.

In this manner, optionally, the processor 141 is specifically configured to:

when a ratio of the peak quantity of the paging messages to the paging capability is less than a second preset threshold, determine that the sending location of the paging information is a location in a first paging cycle group.

In this manner, optionally, a quantity of paging cycles included in the first paging cycle group is greater than a quantity of paging cycles included in a paging cycle group currently used by the radio access network device.

In this manner, optionally, the processor 141 is specifically configured to:

when a ratio of the peak quantity of the paging messages to the paging capability is greater than a third preset threshold, determine that the sending location of the paging information is a location in a second paging cycle group.

In this manner, optionally, a quantity of paging cycles included in the second paging cycle group is less than a quantity of paging cycles included in a paging cycle group currently used by the radio access network device.

In another manner, the processor 141 is configured to:

determine, based on third information, a quantity of paging cycles included in a paging cycle group and a sending location of paging information in the paging cycle group, and control the transceiver 143 to send the paging information at the sending location. The paging cycle group includes at least one paging cycle, and different paging occasions in the paging cycle group serve different terminals. The third information is used to indicate system load of the radio access network device.

In this manner, optionally, the processor 141 is specifically configured to:

when the system load is greater than or equal to a first preset threshold, determine that the sending location of the paging information is a location in a third paging cycle group.

In this manner, optionally, the third paging cycle group includes a paging cycle.

In the foregoing two manners, optionally, the sending location includes at least one paging cycle in the paging cycle group.

In the foregoing two manners, optionally, the sending location includes at least one paging frame in the at least one paging cycle in the paging cycle group.

In the foregoing two manners, optionally, the sending location includes at least one paging occasion in at least one paging frame in the at least one paging cycle in the paging cycle group.

In the foregoing two manners, optionally, the processor 141 is specifically configured to:

control the transceiver 143 to receive a first message sent by the core network device, where the first message is used to indicate the radio access network device to page a target terminal device; and control the transceiver 143 to send a second message to the target terminal device at a location that belongs to the target terminal device and that is in the sending location, where the second message is used to page the target terminal device.

The system bus mentioned in FIG. 14 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of representation, only one thick line is used to represent the system bus in the figure, but this does not mean that there is only one bus or only one type of bus. The communication interface is configured to implement communication between a database access apparatus and another device (such as a client, a read/write database, or a read-only database). The memory may include a random access memory (random access memory, RAM), or may further include a non-volatile memory (non-volatile memory), for example, at least one magnetic disk memory.

The processor may be a general-purpose processor, including a central processing unit CPU, a network processor (network processor, NP), or the like; or may be a digital signal processor DSP, an application-specific integrated circuit ASIC, a field programmable gate array FPGA or another programmable logic device, a discrete gate or a transistor logic device, or a discrete hardware component.

FIG. 15 is a schematic diagram of a structure of a terminal device according to an embodiment of this application. As shown in FIG. 15, the terminal device 1500 may include a processor 151 (for example, a CPU), a memory 152, and a transceiver 153. The transceiver 153 is coupled to the processor 151, and the processor 151 controls sending and receiving actions of the transceiver 153. The memory 152 may store various instructions to complete various processing functions and implement method steps performed by the terminal device in this embodiment of this application. Optionally, the terminal device in this embodiment of this application may further include a power supply 154, a system bus 155, and a communication port 156. The transceiver 153 may be integrated into a transceiver of the terminal device, or may be an independent transceiver antenna of the terminal device. The system bus 155 is configured to implement communication connections between components. The communication port 156 is configured to implement connection and communication between the terminal device and another peripheral.

In this embodiment of this application, the processor 151 is coupled to the memory 152, and is configured to read and execute instructions in the memory 152, to implement the method steps performed by the terminal device in the foregoing method embodiments. The transceiver 153 is coupled to the processor 151, and the processor 151 controls the transceiver 153 to send and receive a message.

In one manner, the processor 151 is configured to:

control the transceiver 153 to receive paging information at a sending location, where the sending location is a sending location in a paging cycle group, the paging cycle group includes at least one paging cycle, and different paging occasions in the paging cycle group serve different terminal devices.

A quantity of paging cycles included in the paging cycle group and the sending location in the paging cycle group are determined by a radio access network device based on first information and second information, the first information is used to indicate a peak quantity of paging messages from a core network device and paging messages generated by the radio access network device within specified time, and the second information is used to indicate a paging capability of the radio access network device.

In this manner, the quantity of paging cycles included in the paging cycle group and the sending location in the paging cycle group are determined by the radio access network device based on the first information, the second information, and third information, and the third information is used to indicate system load of the radio access network device.

In another manner, the processor 151 is configured to:

control the transceiver 153 to receive paging information at a sending location, where the sending location is a sending location in a paging cycle group, the paging cycle group includes at least one paging cycle, and different paging occasions in the paging cycle group serve different terminal devices.

A quantity of paging cycles included in the paging cycle group and the sending location in the paging cycle group are determined by a radio access network device based on third information, and the third information is used to indicate system load of the radio access network device.

In the foregoing two manners, optionally, the sending location includes at least one paging cycle in the paging cycle group.

In the foregoing two manners, optionally, the sending location includes at least one paging cycle in the paging cycle group.

In the foregoing two manners, optionally, the sending location includes at least one paging frame in the at least one paging cycle in the paging cycle group.

In the foregoing two manners, optionally, the sending location includes at least one paging occasion in at least one paging frame in the at least one paging cycle in the paging cycle group.

In the foregoing two manners, optionally, the processor 151 is further configured to:

control the transceiver 153 to receive a second message at a location that belongs to the terminal device and that is in the sending location, where the second message is used to page the terminal device.

The system bus mentioned in FIG. 15 may be a PCI bus, an EISA bus, or the like. The system bus may be classified into an address bus, a data bus, a control bus, and the like. For ease of representation, only one thick line is used to represent the system bus in the figure, but this does not mean that there is only one bus or only one type of bus. The communication interface is configured to implement communication between a database access apparatus and another device (such as a client, a read/write database, or a read-only database). The memory may include a RAM, or may further include a non-volatile memory (non-volatile memory), for example, at least one magnetic disk memory.

The processor may be a general-purpose processor, including a CPU, an NP, or the like; or may be a DSP, an ASIC, an FPGA or another programmable logic device, a discrete gate or a transistor logic device, or a discrete hardware component.

Optionally, an embodiment of this application further provides a computer-readable storage medium. The storage medium stores instructions. When the instructions are run on a computer, the computer is enabled to perform a processing process of the radio access network device or the terminal device in the foregoing embodiments.

Optionally, an embodiment of this application further provides a chip for running instructions. The chip is configured to perform a processing process of the radio access network device or the terminal device in the foregoing embodiments.

An embodiment of this application further provides a program product. The program product includes a computer program, the computer program is stored in a storage medium, at least one processor may read the computer program from the storage medium, and the at least one processor performs a processing process of the radio access network device or the terminal device in the foregoing embodiments.

In embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. In a formula, the character "/" indicates a "division" relationship between the associated objects. At least one item (piece) of the following or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural.

The scope of the invention is defined by the appended claims.

**Claims**

1. A communication method, comprising:

   determining (S401), by a radio access network device based on first information and second information, a quantity of paging cycles comprised in a paging cycle group and a sending location of paging information in the paging cycle group, wherein the paging cycle group comprises at least one paging cycle, and different paging occasions in the paging cycle group serve different terminal devices, wherein
   the first information is used to indicate a peak quantity of paging messages from a core network device and paging messages generated by the radio access network device within specified time; and
   the second information is used to indicate a paging capability of the radio access network device; and
   sending (S402), by the radio access network device, the paging information at the sending location.

2. The method according to claim 1, wherein the determining (S401), by a radio access network device based on first information and second information, a quantity of paging cycles comprised in a paging cycle group and a sending location of paging information in the paging cycle group comprises:

   determining, by the radio access network device based on the first information, the second information, and third information, the quantity of the paging cycles comprised in the paging cycle group and the sending location of the paging information in the paging cycle group, wherein
   the third information is used to indicate system load of the radio access network device.

3. The method according to claim 2, wherein the determining, by the radio access network device based on the first information, the second information, and third information, the quantity of the paging cycles comprised in the paging cycle group and the sending location of the paging information in the paging cycle group comprises:
   if the system load is less than a first preset threshold, determining, by the radio access network device based on the first information and the second information, the quantity of the paging cycles comprised in the paging cycle group and the sending location of the paging information in the paging cycle group.

4. The method according to claim 1 or 3, wherein the determining (S401), by the radio access network device, based on first information and second information, a quantity of paging cycles comprised in a paging cycle group and a sending location of paging information in the paging cycle group comprises:
   if a ratio of the peak quantity of the paging messages to the paging capability is less than a second preset threshold, determining, by the radio access network device, that the sending location of the paging information is a location in a first paging cycle group.

5. The method according to claim 4, wherein a quantity of paging cycles comprised in the first paging cycle group is greater than a quantity of paging cycles comprised in a paging cycle group currently used by the radio access network device.

6. The method according to claim 1 or 3, wherein the determining (S401), by a radio access network device based on first information and second information, a quantity of paging cycles comprised in a paging cycle group and a sending location of paging information in the paging cycle group comprises:
   if a ratio of the peak quantity of the paging messages to the paging capability is greater than a third preset threshold, determining, by the radio access network device, that the sending location of the paging information is a location in a second paging cycle group.

7. The method according to claim 6, wherein a quantity of paging cycles comprised in the second paging cycle group is less than a quantity of paging cycles comprised in a paging cycle group currently used by the radio access network device.

8. The method according to any one of claims 1 to 7, wherein the sending location comprises at least one paging cycle in the paging cycle group; or

wherein the sending location comprises at least one paging frame in the at least one paging cycle in the paging cycle group; or.
wherein the sending location comprises at least one paging occasion in at least one paging frame in the at least one paging cycle in the paging cycle group.

9. The method according to any one of claims 1 to 8, wherein the sending (S402), by the radio access network device, the paging information at the sending location comprises:

receiving, by the radio access network device, a first message sent by the core network device, wherein the first message is used to indicate the radio access network device to page a target terminal device; and
sending, by the radio access network device, a second message to the target terminal device at a location that belongs to the target terminal device and that is in the sending location, wherein the second message is used to page the target terminal device.

10. The method according to any one of claims 1 to 9, further comprising:
receiving, by a terminal device, the paging information at the sending location.

11. A communication apparatus, comprising means for carrying out steps of the method according to any one of claims 1 to 9.

12. A communication system, comprising a radio access network device for carrying out steps of the method according to claim 1 to 9; and a terminal device for carrying out steps of the method according to claim 10.

13. A computer program product, wherein the computer program product comprises computer program code, and when the computer program code is executed by a computer, the computer is enabled to perform the method according to any one of claims 1 to 9.

14. A computer-readable storage medium, wherein the computer-readable storage medium stores computer instructions, and when the computer instructions are executed by a computer, the computer is enabled to perform the method according to any one of claims 1 to 9.

**Patentansprüche**

1. Kommunikationsverfahren, umfassend:

Bestimmen (S401) einer Anzahl von Paging-Zyklen, die in einer Paging-Zyklusgruppe enthalten sind, und eines Sendeorts von Paging-Informationen in der Paging-Zyklusgruppe durch eine Funkzugangsnetzwerkvorrichtung auf der Grundlage erster Informationen und zweiter Informationen, wobei die Paging-Zyklusgruppe mindestens einen Paging-Zyklus umfasst und unterschiedliche Paging-Anlässe in der Paging-Zyklusgruppe unterschiedliche Endgerätevorrichtungen bedienen, wobei die ersten Informationen verwendet werden, um eine Spitzenmenge von Paging-Nachrichten von einem Kernnetzwerkgerät und von Paging-Nachrichten anzuzeigen, die von der Funkzugangsnetzwerkvorrichtung innerhalb einer bestimmten Zeit generiert werden; und
die zweiten Informationen verwendet werden, um eine Paging-Fähigkeit der Funkzugangsnetzwerkvorrichtung anzuzeigen; und
Senden (S402) der Paging-Informationen an den Sendeort durch die Funkzugangsnetzwerkvorrichtung.

2. Verfahren nach Anspruch 1, wobei das Bestimmen (S401) einer Anzahl von Paging-Zyklen, die in einer Paging-Zyklusgruppe enthalten sind, und eines Sendeorts von Paging-Informationen in der Paging-Zyklusgruppe durch eine Funkzugangsnetzwerkvorrichtung auf der Grundlage von ersten Informationen und zweiten Informationen Folgendes umfasst: Bestimmen der Anzahl der in der Paging-Zyklusgruppe enthaltenen Paging-Zyklen und des Sendeorts der Paging-Informationen in der Paging-Zyklusgruppe durch die Funkzugangsnetzwerkvorrichtung auf der Grundlage der ersten Informationen, der zweiten Informationen und der dritten Informationen, wobei
die dritten Informationen verwendet werden, um die Systemlast der Funkzugangsnetzwerkvorrichtung anzuzeigen.

**3.** Verfahren nach Anspruch 2, wobei das Bestimmen der Anzahl der in der Paging-Zyklusgruppe enthaltenen Paging-Zyklen und des Sendeorts der Paging-Informationen in der Paging-Zyklusgruppe durch die Funkzugangsnetzwerkvorrichtung basierend auf den ersten Informationen, den zweiten Informationen und den dritten Informationen Folgendes umfasst:

wenn die Systemlast unter einem ersten voreingestellten Schwellenwert liegt, Bestimmen der Anzahl der in der Paging-Zyklusgruppe enthaltenen Paging-Zyklen und des Sendeorts der Paging-Informationen in der Paging-Zyklusgruppe durch die Funkzugangsnetzwerkvorrichtung auf der Grundlage der ersten Informationen und der zweiten Informationen.

**4.** Verfahren nach Anspruch 1 bis 3, wobei das Bestimmen (S401) einer Anzahl von Paging-Zyklen, die in einer Paging-Zyklusgruppe enthalten sind, und eines Sendeorts von Paging-Informationen in der Paging-Zyklusgruppe durch die Funkzugangsnetzwerkvorrichtung auf der Grundlage von ersten Informationen und zweiten Informationen Folgendes umfasst:

wenn ein Verhältnis der Spitzenmenge der Paging-Nachrichten zur Paging-Fähigkeit kleiner als ein zweiter voreingestellter Schwellenwert ist, Bestimmen durch die Funkzugangsnetzwerkvorrichtung, dass der Sendeort der Paging-Informationen ein Ort in einer ersten Paging-Zyklusgruppe ist.

**5.** Verfahren nach Anspruch 4, wobei eine Anzahl von Paging-Zyklen, die in der ersten Paging-Zyklusgruppe enthalten sind, größer ist als eine Anzahl von Paging-Zyklen, die in einer aktuell von der Funkzugangsnetzwerkvorrichtung verwendeten Paging-Zyklusgruppe enthalten sind.

**6.** Verfahren nach Anspruch 1 bis 3, wobei das Bestimmen (S401) einer Anzahl von Paging-Zyklen, die in einer Paging-Zyklusgruppe enthalten sind, und eines Sendeorts von Paging-Informationen in der Paging-Zyklusgruppe durch eine Funkzugangsnetzwerkvorrichtung auf der Grundlage von ersten Informationen und zweiten Informationen Folgendes umfasst:

wenn ein Verhältnis der Spitzenmenge der Paging-Nachrichten zur Paging-Fähigkeit größer als ein dritter voreingestellter Schwellenwert ist, Bestimmen durch die Funkzugangsnetzwerkvorrichtung, dass der Sendeort der Paging-Informationen ein Ort in einer zweiten Paging-Zyklusgruppe ist.

**7.** Verfahren nach Anspruch 6, wobei eine Anzahl von Paging-Zyklen, die in der zweiten Paging-Zyklusgruppe enthalten sind, weniger ist als eine Anzahl von Paging-Zyklen, die in einer aktuell von der Funkzugangsnetzwerkvorrichtung verwendeten Paging-Zyklusgruppe enthalten sind.

**8.** Verfahren nach einem der Ansprüche 1 bis 7, wobei der Sendeort mindestens einen Paging-Zyklus in der Paging-ZyklusGruppe umfasst; oder
wobei der Sendeort mindestens einen Paging-Frame in mindestens einem Paging-Zyklus in der Paging-Zyklusgruppe umfasst; oder wobei der Sendeort mindestens eine Paging-Gelegenheit in mindestens einem Paging-Frame in dem mindestens einen Paging-Zyklus in der Paging-Zyklusgruppe umfasst.

**9.** Verfahren nach einem der Ansprüche 1 bis 8, wobei das Senden (S402) der Paging-Informationen durch die Funkzugangsnetzwerkvorrichtung am Sendeort Folgendes umfasst:

Empfangen einer ersten, von der Kernnetzwerkvorrichtung gesendeten Nachricht durch die Funkzugangsnetzwerkvorrichtung, wobei die erste Nachricht verwendet wird, um der Funkzugangsnetzwerkvorrichtung anzuzeigen, dass es eine Ziel-Endgerätevorrichtung pagen soll; und
Senden einer zweiten Nachricht durch die Funkzugangsnetzwerkvorrichtung an die Ziel-Endgerätevorrichtung an einem Ort, der zur Ziel-Endgerätevorrichtung gehört und der sich am Sendeort befindet, wobei die zweite Nachricht zum Paging der Zielendgerätevorrichtung verwendet wird.

**10.** Verfahren nach einem der Ansprüche 1 bis 9, ferner umfassend:
Empfangen der Paging-Informationen durch eine Endgerätevorrichtung am Sendeort.

**11.** Kommunikationsvorrichtung, umfassend Mittel zum Ausführen der Schritte des Verfahrens nach einem der Ansprüche 1-9.

**12.** Kommunikationssystem, umfassend eine Funkzugangsnetzwerkvorrichtung zum Ausführen der Schritte des Verfahrens nach Anspruch 1 bis 9; und eine Endgerätevorrichtung zum Ausführen der Schritte des Verfahrens nach Anspruch 10.

13. Computerprogrammprodukt, wobei das Computerprogrammprodukt einen Computerprogrammcode umfasst und, wenn der Computerprogrammcode durch einen Computer ausgeführt wird, der Computer befähigt wird, das Verfahren nach einem der Ansprüche 1 bis 9 durchzuführen.

14. Computerlesbares Speichermedium, wobei das computerlesbare Speichermedium Computeranweisungen speichert, und wenn die Computeranweisungen von einem Computer ausgeführt werden, ist der Computer in der Lage, das Verfahren nach einem der Ansprüche 1 bis 9 auszuführen.

**Revendications**

1. Procédé de communication, comprenant :

   la détermination (S401), par un dispositif de réseau d'accès radio sur la base de premières informations et de deuxièmes informations, d'une quantité de cycles de radiomessagerie comprise dans un groupe de cycles de radiomessagerie et d'un emplacement d'envoi d'informations de radiomessagerie dans le groupe de cycles de radiomessagerie, dans lequel le groupe de cycles de radiomessagerie comprend au moins un cycle de radiomessagerie, et différentes occasions de radiomessagerie dans le groupe de cycles de radiomessagerie desservent différents dispositifs terminaux, dans lequel
   les premières informations sont utilisées pour indiquer une quantité maximale de messages de radiomessagerie depuis un dispositif de réseau central et de messages de radiomessagerie générés par le dispositif de réseau d'accès radio dans un délai spécifié ; et
   les deuxièmes informations sont utilisées pour indiquer une capacité de radiomessagerie du dispositif de réseau d'accès radio ; et
   l'envoi (S402), par le dispositif de réseau d'accès radio, des informations de radiomessagerie au niveau de l'emplacement d'envoi.

2. Procédé selon la revendication 1, dans lequel la détermination (S401), par un dispositif de réseau d'accès radio sur la base de premières informations et de deuxièmes informations, d'une quantité de cycles de radiomessagerie comprise dans un groupe de cycles de radiomessagerie et d'un emplacement d'envoi d'informations de radiomessagerie dans le groupe de cycles de radiomessagerie comprend :

   la détermination, par le dispositif de réseau d'accès radio sur la base des premières informations, des deuxièmes informations et des troisièmes informations, de la quantité de cycles de radiomessagerie comprise dans le groupe de cycles de radiomessagerie et de l'emplacement d'envoi des informations de radiomessagerie dans le groupe de cycles de radiomessagerie, dans lequel
   les troisièmes informations sont utilisées pour indiquer la charge système du dispositif de réseau d'accès radio.

3. Procédé selon la revendication 2, dans lequel la détermination, par le dispositif de réseau d'accès radio sur la base des premières informations, des deuxièmes informations et des troisièmes informations, de la quantité des cycles de radiomessagerie comprise dans le groupe de cycles de radiomessagerie et de l'emplacement d'envoi des informations de radiomessagerie dans le groupe de cycles de radiomessagerie comprend :
   si la charge système est inférieure à un premier seuil prédéfini, la détermination, par le dispositif de réseau d'accès radio sur la base des premières informations et des deuxièmes informations, de la quantité de cycles de radiomessagerie comprise dans le groupe de cycles de radiomessagerie et de l'emplacement d'envoi des informations de radiomessagerie dans le groupe de cycles de radiomessagerie.

4. Procédé selon la revendication 1 ou 3, dans lequel la détermination (S401), par le dispositif de réseau d'accès radio, sur la base de premières informations et de deuxièmes informations, d'une quantité de cycles de radiomessagerie comprise dans un groupe de cycles de radiomessagerie et d'un emplacement d'envoi d'informations de radiomessagerie dans le groupe de cycles de radiomessagerie comprend :
   si un rapport entre la quantité maximale des messages de radiomessagerie et la capacité de radiomessagerie est inférieur à un deuxième seuil prédéfini, la détermination, par le dispositif de réseau d'accès radio, du fait que l'emplacement d'envoi des informations de radiomessagerie est un emplacement dans un premier groupe de cycles de radiomessagerie.

5. Procédé selon la revendication 4, dans lequel une quantité de cycles de radiomessagerie comprise dans le premier groupe de cycles de radiomessagerie est supérieure à une quantité de cycles de radiomessagerie comprise dans un groupe de cycles de radiomessagerie actuellement utilisé par le dispositif de réseau d'accès radio.

**6.** Procédé selon la revendication 1 ou 3, dans lequel la détermination (S401), par un dispositif de réseau d'accès radio sur la base de premières informations et de deuxièmes informations, d'une quantité de cycles de radiomessagerie comprise dans un groupe de cycles de radiomessagerie et d'un emplacement d'envoi d'informations de radiomessagerie dans le groupe de cycles de radiomessagerie comprend :
si un rapport entre la quantité maximale des messages de radiomessagerie et la capacité de radiomessagerie est supérieur à un troisième seuil prédéfini, la détermination, par le dispositif de réseau d'accès radio, du fait que l'emplacement d'envoi des informations de radiomessagerie est un emplacement dans un second groupe de cycles de radiomessagerie.

**7.** Procédé selon la revendication 6, dans lequel une quantité de cycles de radiomessagerie comprise dans le second groupe de cycles de radiomessagerie est inférieure à une quantité de cycles de radiomessagerie comprise dans un groupe de cycles de radiomessagerie actuellement utilisé par le dispositif de réseau d'accès radio.

**8.** Procédé selon l'une quelconque des revendications 1 à 7, dans lequel l'emplacement d'envoi comprend au moins un cycle de radiomessagerie dans le groupe de cycles de radiomessagerie ; ou

dans lequel l'emplacement d'envoi comprend au moins une trame de radiomessagerie dans l'au moins un cycle de radiomessagerie dans le groupe de cycles de radiomessagerie ; ou
dans lequel l'emplacement d'envoi comprend au moins une occasion de radiomessagerie dans au moins une trame de radiomessagerie dans l'au moins un cycle de radiomessagerie dans le groupe de cycles de radiomessagerie.

**9.** Procédé selon l'une quelconque des revendications 1 à 8, dans lequel l'envoi (S402), par le dispositif de réseau d'accès radio, des informations de radiomessagerie au niveau de l'emplacement d'envoi comprend :

la réception, par le dispositif de réseau d'accès radio, d'un premier message envoyé par le dispositif de réseau central, dans lequel le premier message est utilisé pour indiquer au dispositif de réseau d'accès radio d'appeler un dispositif terminal cible ; et
l'envoi, par le dispositif de réseau d'accès radio, d'un second message au dispositif terminal cible au niveau d'un emplacement qui appartient au dispositif terminal cible et qui se trouve à l'emplacement d'envoi, dans lequel le second message est utilisé pour appeler le dispositif terminal cible.

**10.** Procédé selon l'une quelconque des revendications 1 à 9, comprenant également :
la réception, par un dispositif terminal, des informations de radiomessagerie au niveau de l'emplacement d'envoi.

**11.** Appareil de communication, comprenant un moyen pour mettre en oeuvre les étapes du procédé selon l'une quelconque des revendications 1 à 9.

**12.** Système de communication, comprenant un dispositif de réseau d'accès radio pour mettre en oeuvre les étapes du procédé selon les revendications 1 à 9 ; et dispositif terminal pour mettre en oeuvre les étapes du procédé selon la revendication 10.

**13.** Produit de programme informatique, dans lequel le produit de programme informatique comprend un code de programme informatique, et lorsque le code de programme informatique est exécuté par un ordinateur, l'ordinateur est activé pour exécuter le procédé selon l'une quelconque des revendications 1 à 9.

**14.** Support de stockage lisible par ordinateur, dans lequel le support de stockage lisible par ordinateur stocke des instructions informatiques, et lorsque les instructions informatiques sont exécutées par un ordinateur, l'ordinateur est activé pour exécuter le procédé selon l'une quelconque des revendications 1 à 9.

Core network
device 110

Radio access
network device 120

Terminal
device 130

Terminal
device 140

FIG. 1

FIG. 2

EP 4 054 255 B1

FIG. 3

S401

A radio access network device determines, based on first information and second information, a quantity of paging cycles included in a paging cycle group and a sending location of paging information in the paging cycle group, where the paging cycle group includes at least one paging cycle, and different paging occasions in the paging cycle group serve different terminal devices

S402

The radio access network device sends the paging information at the sending location

FIG. 4

FIG. 5

Paging information of
a core network device

Non-aggregation
manner

Radio frame | Paging cycle 1 | Paging cycle 2 | ... | Paging cycle n–1 | Paging cycle n

t

Paging information sent
to a terminal device

Paging information of
a core network device

Aggregation
manner

Radio frame | Paging cycle 1 | Paging cycle 2 | ... | Paging cycle n–1 | Paging cycle n

t

Paging information sent
to a terminal device

FIG. 6

| Paging cycle 1 | | | | | | | | | | | | | | | | | | | | | | |
|---|---|---|---|---|---|---|---|---|---|---|---|---|---|---|---|---|---|---|---|---|---|---|
| PF#1 | | | | | | | PF#2 | | | | | | | ... | PF#N | | | | | | | |
| PO | PO | PO | PO | | | | PO | PO | PO | PO | | | | | PO | PO | PO | PO | | | | |

| Paging cycle 2 | | | | | | | | | | | | | | | | | | | | | | |
|---|---|---|---|---|---|---|---|---|---|---|---|---|---|---|---|---|---|---|---|---|---|---|
| PF#1 | | | | | | | PF#2 | | | | | | | ... | PF#N | | | | | | | |
| PO | PO | PO | PO | | | | PO | PO | PO | PO | | | | | PO | PO | PO | PO | | | | |

...

| Paging cycle ns−1 | | | | | | | | | | | | | | | | | | | | | | |
|---|---|---|---|---|---|---|---|---|---|---|---|---|---|---|---|---|---|---|---|---|---|---|
| PF#1 | | | | | | | PF#2 | | | | | | | ... | PF#N | | | | | | | |
| PO | PO | PO | PO | | | | PO | PO | PO | PO | | | | | PO | PO | PO | PO | | | | |

| Paging cycle ns | | | | | | | | | | | | | | | | | | | | | | |
|---|---|---|---|---|---|---|---|---|---|---|---|---|---|---|---|---|---|---|---|---|---|---|
| PF#1 | | | | | | | PF#2 | | | | | | | ... | PF#N | | | | | | | |
| PO | PO | PO | PO | | | | PO | PO | PO | PO | | | | | PO | PO | PO | PO | | | | |

TO
FIG. 7B

FIG. 7A

FIG. 7B

EP 4 054 255 B1

FIG. 8

| Core network device | | Radio access network device | | Terminal device |
|---|---|---|---|---|

S901: First message

S902: Determine, based on a determined sending position of paging information in a paging cycle group and an identifier of a target terminal device, a paging occasion and a beam for paging the target terminal device

S903: Second message

FIG. 9

Radio access network device

| Processing module | Sending module |
|---|---|

1001          1002

FIG. 10

Radio access network device

Processing module ——— Sending module

1101           1102

FIG. 11

Terminal device

Receiving module ——— Processing module

1201           1202

FIG. 12

Terminal device

Receiving module ——— Processing module

1301           1302

FIG. 13

141 144
145

Processor | Power supply

Memory | 142 | 1400

Transceiver | Communication port | 146
143

FIG. 14

151 154
155

Processor | Power supply

Memory | 152 | 1500

Transceiver | Communication port | 156
153

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101534553 A